(19) Europäisches Patentamt
European Patent Office
Office européen des brevets

(11) **EP 3 828 695 A1**

(12) **DEMANDE DE BREVET EUROPEEN**

(43) Date de publication:
**02.06.2021 Bulletin 2021/22**

(51) Int Cl.:
**G06F 8/41** (2018.01)     **G06F 21/44** (2013.01)
**G06F 21/51** (2013.01)     **G06F 21/56** (2013.01)

(21) Numéro de dépôt: **20206077.8**

(22) Date de dépôt: **06.11.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
**KH MA MD TN**

(30) Priorité: **27.11.2019 FR 1913348**

(71) Demandeur: **Commissariat à l'Energie Atomique et aux Energies Alternatives**
**75015 Paris (FR)**

(72) Inventeurs:
• **SID LAKHDAR, Riyane**
  **38054 GRENOBLE cedex 09 (FR)**
• **CHARLES, Henri-Pierre**
  **38054 GRENOBLE cedex 09 (FR)**
• **KOOLI, Maha**
  **38054 GRENOBLE cedex 09 (FR)**

(74) Mandataire: **INNOV-GROUP**
**310, avenue Berthelot**
**69372 Lyon Cedex 08 (FR)**

(54) **PROCÉDÉ DE CONSTRUCTION D'UNE SIGNATURE CARACTÉRISTIQUE DES ACCÈS, PAR UN MICROPROCESSEUR, À UNE MÉMOIRE**

(57) Procédé de construction d'une signature caractéristique des accès, par un microprocesseur, à une mémoire dans lequel :
- à chaque fois que le microprocesseur exécute une instruction d'accès à une donnée d'une structure de données, le microprocesseur relève (114) l'identifiant de la structure de données et un identifiant de position qui identifie la position de la donnée accédée à l'intérieur de cette structure de données, la suite ordonnée temporellement des identifiants de position ainsi relevés formant un motif d'accès relevé, puis
- pour chaque motif d'accès relevé associé à un même identifiant de structure de données, le microprocesseur construit (120) une distribution statistique à partir des seuls identifiants de position de ce motif d'accès relevé, l'ensemble des distributions statistiques ainsi construit et associé à l'identifiant de cette structure de données formant la signature caractéristique des accès à la mémoire.

Fig. 9

**Description**

L'invention concerne un procédé de construction d'une signature caractéristique des accès, par un microprocesseur, à une mémoire lorsque ce microprocesseur exécute un programme d'ordinateur. L'invention concerne également un procédé de compilation d'un code source d'un programme d'ordinateur en l'adaptant spécifiquement à un calculateur cible dans un but d'optimisation et un procédé de détection d'altération d'un code exécutable d'un programme d'ordinateur exécuté par un microprocesseur, ces deux procédés mettant en œuvre le procédé de construction d'une signature caractéristique.

L'invention concerne également un support d'enregistrement d'informations pour la mise en œuvre de ces procédés ainsi qu'un compilateur.

Par la suite, dans ce texte, le terme « programme d'ordinateur » est utilisé comme un terme générique et peut donc désigner aussi bien le code source de ce programme d'ordinateur que le code exécutable de ce programme d'ordinateur.

L'expression "accéder à une donnée" désigne le fait de lire et/ou d'écrire une donnée dans la mémoire.

La construction d'une signature caractéristique des accès à la mémoire a de nombreuses applications différentes. Par exemple, l'article suivant décrit une application où une telle signature est utilisée pour détecter des programmes malveillants : Zhixing Xu et Al : "Malware detection using machine learning based analysis of virtual memory access patterns", Proceedings of the conférence on design, automation & test in Europe , pages 169-174. European Design and Automation Association, 2017.

De l'état de la technique est également connu de WO2019/063930 et JP2010003031. WO2019/063930 vise à reconnaître une fonction particulière telle qu'une multiplication de matrices. Pour cela, WO2019/063930 enseigne de construire une signature qui comporte la suite d'opcodes exécutés ainsi que, dans certains modes de réalisations, une séquence d'adresses de mots-machines lus ou écrits dans la mémoire pendant l'exécution d'une fonction. Pour cela, pendant l'exécution de la fonction, les adresses accédées sont systématiquement relevées. Par contre, les identifiants des structures de données qui comportent les données accédées ne sont pas relevés. Ainsi, la séquence d'adresses relevées comportent toutes les adresses accédées pendant l'exécution de la fonction et pas seulement les adresses accédées correspondant à une structure de données particulière. Ainsi, la séquence d'adresses relevée dans WO2019/063930 n'est pas représentative d'un parcours particulier d'une structure de données particulière. De plus, cette signature est construite par un gestionnaire indépendant du programme d'ordinateur exécuté et dans lequel cette fonction particulière doit être reconnue. Un tel gestionnaire indépendant du programme d'ordinateur exécuté peut seulement relever les adresses physiques des mots-machine lus ou écrits par le programme d'ordinateur lorsqu'il s'exécute. Une telle adresse physique ne permet pas au gestionnaire de connaître la position de la donnée accédée à l'intérieur de la structure de données. En effet, l'adresse physique relevée est déterminée par le système d'exploitation. Or les systèmes d'exploitation sont programmés pour optimiser l'usage de la mémoire principale et pour cela ils n'enregistrent pas nécessairement toutes les données d'une même structure de données les unes à coté des autres. Ainsi, les données d'une même structure de données peuvent se retrouver éparpillées dans plusieurs plages d'adresses physiques séparées les unes des autres par d'autres plages d'adresses physiques contenant des données qui n'appartiennent pas à cette structure de données. Dans ces conditions, la distance qui sépare deux adresses physiques d'une même structure de données n'est pas nécessairement représentative de la distance qui séparent les adresses virtuelles de ces mêmes données dans l'espace d'adressage du programme d'ordinateur. De plus, cette distance qui sépare deux adresses physiques de deux données de la même structure de données peut varier d'une exécution à l'autre du programme d'ordinateur.

JP2010003031 décrit un procédé d'analyse des accès à une structure de données dans le code objet d'un programme d'ordinateur et donc avant de compiler et d'exécuter ce programme d'ordinateur. Ainsi, ce procédé ne peut pas être mis en œuvre avec un programme d'ordinateur pour lequel on ne dispose que d'un code exécutable. De plus, il nécessite de mettre en œuvre une analyse complexe du code source.

La difficulté avec les procédés connus de construction d'une signature caractéristique des accès à la mémoire est que la signature caractéristique construite par ces procédés connus est faiblement reproductible sur une grande majorité de plateformes. En effet, les signatures caractéristiques construites connues dépendent aussi d'autres paramètres qui n'ont rien à voir avec les accès à la mémoire. Par exemple, les signatures caractéristiques connues varient souvent :

- en fonction de l'architecture matérielle du microprocesseur qui exécute le programme d'ordinateur qui accède à la mémoire,
- du système d'exploitation exécuté par le microprocesseur, et
- du nombre de fois où, au cours de la même exécution du code exécutable, la mémoire est accédée.

L'invention vise à proposer un procédé de construction d'une signature caractéristique des accès à la mémoire qui est plus reproductible que les signatures construites connues. Elle a donc pour objet un tel procédé de construction d'une signature caractéristique conforme à la revendication 1.

L'invention a également pour objet un procédé de compilation d'un code source utilisant le procédé revendiqué de construction d'une signature caractéristique.

L'invention a également pour objet un procédé de détection d'une altération d'un code exécutable utilisant le procédé revendiqué de construction d'une signature caractéristique.

L'invention a également pour objet un support d'enregistrement d'informations, lisible par un microprocesseur, ce support comportant des instructions pour l'exécution d'un des procédés ci-dessus, lorsque ces instructions sont exécutées par le microprocesseur.

Enfin, l'invention a également pour objet un compilateur pour la mise en œuvre du procédé revendiqué de compilation.

L'invention sera mieux comprise à la lecture de la description qui va suivre, donnée uniquement à titre d'exemple non limitatif et faite en se référant aux dessins sur lesquels :

- la figure 1 est une illustration schématique de l'architecture d'une unité de calcul incorporant un calculateur électronique ;
- la figure 2 est une illustration schématique de l'architecture d'un compilateur ;
- les figures 3 et 4 sont des illustrations schématiques de parcours possibles d'une matrice ;
- les figures 5 à 8 sont des illustrations de signatures modèles utilisées par le compilateur de la figure 2 ;
- la figure 9 est un procédé de compilation d'un code source mis en œuvre par le compilateur de la figure 2 ;
- les figures 10 à 12 illustrent la comparaison de signatures construites à des signatures modèles lors de la mise en œuvre du procédé de la figure 9 ;
- la figure 13 est un graphe illustrant l'amélioration des performances du code exécutable généré par le compilateur de la figure 2 ;
- la figure 14 est un organigramme d'un procédé de détection d'une altération d'un code exécutable.

Dans ces figures les mêmes références sont utilisées pour désigner les mêmes éléments. Dans la suite de cette description, les caractéristiques et fonctions bien connues de l'homme du métier ne sont pas décrites en détail.

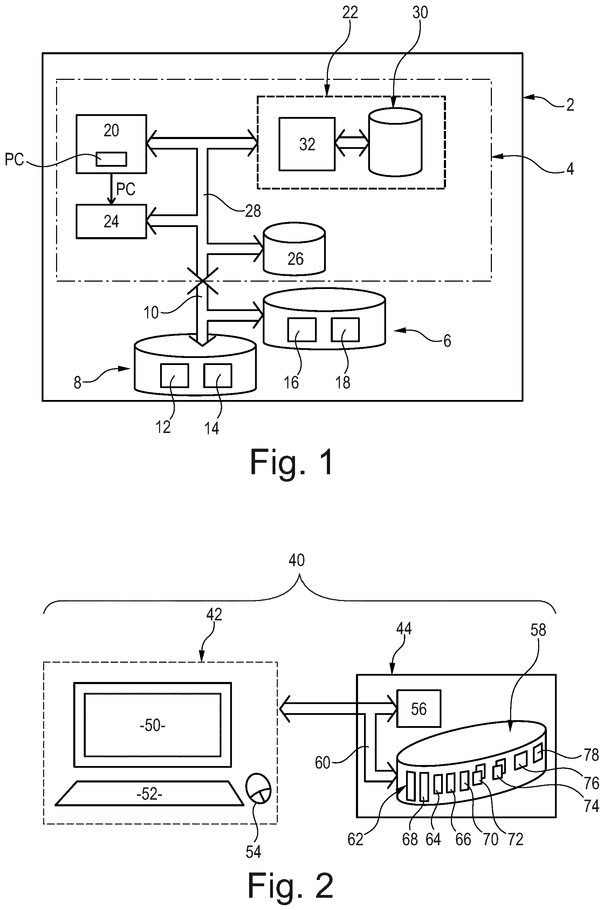

Dans cette description, un exemple détaillé de compilation optimisée d'un code source pour un calculateur cible comportant une mémoire cache est d'abord décrit dans le chapitre I en référence aux figures 1 à 13. Ensuite, dans le chapitre II suivant, des exemples de transposition de l'enseignement du chapitre I à d'autres calculateurs cibles sont présentés. Dans le chapitre III, la détection d'une altération du code exécutable d'un programme d'ordinateur en utilisant la même signature caractéristique que celle présentée dans le chapitre I, est décrit. Différentes variantes des modes de réalisations décrits dans les chapitres précédents sont décrites dans le chapitre IV. Enfin, les avantages des différents modes de réalisation sont présentés dans un dernier chapitre V.

Chapitre I : Compilation optimisée de code source de programme d'ordinateur

Ce chapitre décrit un compilateur et un procédé de compilation d'un code source pour un calculateur cible. Un exemple d'architecture matérielle possible pour ce calculateur cible incorporé dans une unité de calcul est d'abord décrit puis, le compilateur et le procédé de compilation sont décrits.

La figure 1 représente une unité électronique 2 de calcul. Par exemple, l'unité 2 est un ordinateur, un smartphone, une tablette électronique, un bloc de commande d'un moteur ou autre. La structure matérielle d'une telle unité 2 est bien connue et seuls les éléments nécessaires à la compréhension de l'invention sont représentés et décrits plus en détail. L'unité 2 comporte :

- un calculateur électronique programmable 4,
- une mémoire principale 6,
- une mémoire non volatile 8, et
- un bus 10 de transfert de données entre les mémoires 6, 8 et le calculateur 4.

Le calculateur 4 est apte à exécuter un code exécutable d'un programme d'ordinateur obtenu après compilation d'un code source original de ce programme d'ordinateur.

La mémoire 6 est typiquement une mémoire rapide à laquelle le calculateur 4 accède plus rapidement qu'à la mémoire 8. Ici, la mémoire 6 est une mémoire vive. Il peut s'agir d'une mémoire volatile telle qu'une DRAM (« Dynamic Random Access Memory »). La mémoire 6 peut aussi être une mémoire vive non volatile telle qu'une mémoire FLASH.

La mémoire 8 est par exemple un disque dur ou tout autre type de mémoire non volatile. La mémoire 8 comporte un code exécutable 12 d'un programme d'ordinateur. Le code 12 est apte à être exécuté par le calculateur 4. La mémoire 8 peut aussi comporter des données 14 à traiter par ce programme lorsque celui-ci est exécuté. Lors de l'exécution du code exécutable 12 par le calculateur 4, les instructions du code 12 ainsi que les données 14 sont transférées dans un premier temps dans la mémoire 6 pour y accéder plus rapidement. Dans la mémoire 6, les instructions du code exécutable 12 et les données 14 traitées par ce programme portent, respectivement, les références numériques 16 et 18.

Lorsqu'il est exécuté, le code exécutable 12 traite des données structurées. Une donnée structurée est une structure de données. Une structure de données est une structure qui regroupe plusieurs données à l'intérieur d'une plage continue d'adresses virtuelles. A l'intérieur de cette plage d'adresses, les données sont placées les unes par rapport aux autres selon un agencement prédéterminé. Dans ces conditions, la position d'une donnée à l'intérieur d'une structure de données est repérée par un ou plusieurs indices. Ainsi, à partir de la connaissance d'une adresse de base de la structure de données et des valeurs des indices qui repèrent la position d'une donnée à l'intérieur de cette structure de données, il est possible de construire l'adresse virtuelle de cette donnée dans l'espace mémoire du programme d'ordinateur. An utilisant cette adresse virtuelle, chaque donnée de la structure de données peut directement être accédée individuellement. Ainsi, cette donnée peut être lue ou écrite indépendamment des autres données de la structure de données. L'adresse de base d'une structure de données est par exemple l'adresse virtuelle à laquelle débute ou se termine cette structure de données.

Il existe un grand nombre de structures de données possibles comme une matrice à une ou plusieurs dimensions ou un objet en programmation objet ou autres. Étant donné que l'une des structures de données les plus fréquemment utilisée est une matrice à deux dimensions, les principaux exemples détaillés de réalisation sont donnés dans le cas particulier où la structure de données est une matrice à deux dimensions. Toutefois, l'enseignement donné dans ce cas particulier se transpose sans difficulté aux autres structures de données.

Dans le cas d'une matrice, la position de chaque donnée à l'intérieur de la matrice est repérée à l'aide d'indices. Classiquement, dans le cas d'une matrice à deux dimensions, ces indices sont appelés "numéro de ligne" et "numéro de colonne". Le traitement de telles structures de données par le code exécutable 12 implique de nombreux accès aux données de cette structure de données.

Le calculateur 4 comporte :

- un microprocesseur 20 également connu sous l'acronyme CPU (« Central Processing Unit »),
- une mémoire cache 22,
- un module 24 de préchargement également connu sous le terme anglais de « prefetcher »,
- une mémoire tampon 26, et
- un bus 28 de transfert de données entre le microprocesseur 20, la mémoire 22, le module 24, la mémoire tampon 26 et le bus 10.

Le microprocesseur 20 est apte à exécuter le code exécutable 12. A cet effet, il comporte en outre un registre PC appelé Compteur Ordinal (« Program Counter » en anglais) ou pointeur d'instructions (« Instruction Pointer » en anglais) qui contient l'adresse de l'instruction actuellement exécutée ou de l'instruction suivante à exécuter par le microprocesseur 20.

La mémoire cache 22 est ici une mémoire cache à un ou plusieurs niveaux. Dans cet exemple, la mémoire cache 22 est une mémoire cache à trois niveaux. Dans ce cas, les trois niveaux sont connus sous les termes, respectivement, de niveau L1, niveau L2 et niveau L3. La mémoire cache 22 permet de stocker des données auxquelles le microprocesseur 20 peut accéder plus rapidement que si elles avaient été seulement stockées dans la mémoire 6.

Pour le niveau L1, la mémoire 22 comporte une mémoire 30 et un micro-calculateur 32. La mémoire 30 contient les données auxquelles le microprocesseur 20 peut accéder plus rapidement sans avoir à les lire dans la mémoire 6. Le micro-calculateur 32 gère l'enregistrement et l'effacement de données dans la mémoire 30. En particulier, quand une nouvelle donnée doit être enregistrée dans la mémoire 30, le micro-calculateur 32 détermine selon un algorithme qui lui est propre la ou les données à effacer dans la mémoire 30 pour libérer la place nécessaire à l'enregistrement de cette nouvelle donnée dans la mémoire cache 22.

L'architecture des autres niveaux L2 et L3 est similaire et n'a pas été représenté sur la figure 1.

Le module 24 a pour fonction de prédire, avant que le microprocesseur 20 n'en ait besoin, là où les données à précharger dans la mémoire cache 22 puis de déclencher le préchargement de ces données. A cet effet, le module 24 peut comporter un micro-calculateur dédié à cette fonction. Dans ce cas, il comporte sa propre mémoire contenant les instructions nécessaires pour exécuter un procédé de préchargement et son propre microprocesseur qui exécute ces instructions. Il peut aussi s'agir d'un circuit intégré dédié. Dans ce cas, les instructions du procédé de préchargement sont câblées en dur dans ce circuit intégré.

La mémoire 26 est ici une mémoire tampon utilisée par le module 24 pour y enregistrer temporairement la ou les données à précharger avant qu'elles soient transférées, si nécessaire, dans la mémoire cache 22.

Dans le cas du calculateur 4, transférer un mot complet ou une ligne complète de la mémoire 6 dans la mémoire tampon 26 ne prend pas plus de temps que transférer seulement la donnée à précharger. De plus, transférer un mot complet ou une ligne complète permet aussi de limiter l'apparition des défauts de cache. Ainsi, dans le cas du calculateur cible 4, il est préférable que les données d'une structure de données chargées dans la mémoire 22 soient accédées dans le même ordre que l'ordre dans lequel elles sont enregistrées dans la mémoire cache 22. En effet, cela limite les défauts de cache et cela accélère donc considérablement l'exécution du code exécutable 12.

À ce stade, il est souligné que l'agencement de la structure de données qui permet d'accélérer l'exécution du code exécutable dépend notamment du programme d'ordinateur exécuté et de l'architecture matérielle du calculateur cible.

Dans ce texte par « agencement d'une structure de données », on désigne l'agencement des données de cette structure de données dans la mémoire. En particulier, cela désigne donc :

- l'agencement des différentes données de la structure de données les unes par rapport aux autres, et
- l'emplacement où est enregistré la structure de données dans la ou les mémoires du calculateur cible.

Le programme d'ordinateur détermine dans quel ordre temporel les données de la structure de données sont accédées. Ainsi, un agencement d'une structure de données optimisé pour un programme d'ordinateur particulier n'est pas forcément optimal pour un autre programme d'ordinateur. Par exemple, un agencement en mémoire d'une matrice optimisée pour un premier programme d'ordinateur qui accède à cette matrice ligne par ligne n'est pas optimisé pour un second programme d'ordinateur qui accède à cette même matrice colonne par colonne. Ici par « agencement optimisé », on désigne un agencement des données de la structure de données dans la mémoire qui améliore une performance prédéfinie du calculateur cible. Cette performance prédéfinie est une grandeur physique mesurable à l'aide d'un capteur électronique. Dans ce mode de réalisation, la performance prédéfinie est la vitesse d'exécution du programme d'ordinateur. La vitesse d'exécution est mesurée en comptant le nombre de cycle d'horloge du microprocesseur entre l'instant où débute l'exécution du programme et l'instant où cette exécution se termine.

La figure 2 représente un compilateur 40 apte à générer un code exécutable d'un programme d'ordinateur dans lequel les agencements des structures de données sont automatiquement optimisés pour augmenter sa vitesse d'exécution par le calculateur 4. Plus précisément, le compilateur 40 améliore la vitesse d'exécution en générant un code exécutable optimisé qui, lorsqu'il est exécuté par le calculateur cible, utilise à chaque fois que c'est possible des agencements optimisés des structures de données en mémoire. Ainsi, le compilateur 40 améliore les performances du calculateur cible, non pas en modifiant l'ordre dans lequel les instructions d'accès aux donnés sont exécutées, mais seulement en optimisant l'agencement des structures de données dans la mémoire. Ainsi, le compilateur 40 ne modifie en rien l'algorithme développé par le développeur qui a écrit le code source.

À cet effet, le compilateur 40 comporte :

- une interface Homme-Machine 42, et
- une unité centrale 44.

L'interface Homme-Machine 42 comporte, par exemple, un écran 50, un clavier 52 et une souris 54 raccordés à l'unité centrale 44.

L'unité centrale 44 comporte un microprocesseur 56 et une mémoire 58, ainsi qu'un bus 60 d'échanges d'informations raccordant les différents éléments du compilateur 40 entre eux.

Le microprocesseur 56 est apte à exécuter les instructions enregistrées dans la mémoire 58. La mémoire 58 comporte :

- un code source 62 original du programme d'ordinateur à compiler,
- les instructions d'un module 64 de compilation non-optimisée,
- les instructions d'un module 66 de compilation optimisée,
- les instructions d'un module 68 de relevés de motifs d'accès,
- les instructions d'un module 70 de construction de signatures caractéristiques d'accès à la mémoire,
- une base de données 72 des fonctions de transformation, et
- une base 74 de données des codages optimaux de chaque structure de données.

Le code source 62 est un code source qui, après compilation, correspond à un code exécutable qui traite et manipule des structures de données lorsqu'il est exécuté par le calculateur cible. À cet effet, le code source 62 contient notamment :

- des déclarations d'une ou plusieurs structures de données,
- des instructions d'accès aux données des structures de données déclarées, et
- des instructions de manipulation des données accédées.

Les instructions de manipulation des données sont, par exemple, choisies dans le groupe constitué :

- des instructions booléennes, comme les opérations OR, XOR, AND, NAND, et
- des instructions arithmétiques comme une addition, une soustraction, une division ou une multiplication.

Par la suite, la description du compilateur 40 est illustrée dans le cas particulier où le code source 62 réalise la multiplication de deux matrices « a » et « b » et enregistre le résultat de cette multiplication dans une matrice « res ». Un exemple d'un tel code source est donné dans l'annexe 1 à la fin de la description. Dans ces annexes, les numéros à gauche et en petits caractères sont des numéros de lignes.

Ici, le code source 62 est écrit dans un langage de programmation appelé par la suite « langage V0 ». Le langage V0 est identique au langage C++ sauf qu'il a été doté en plus des instructions « MATRIX_DEFINE », « MATRIX_ALLOCATE », « MATRIX_FREE ».

L'instruction « MATRIX_DEFINE » déclare une structure de données et, plus précisément, une matrices à deux dimensions. L'instruction « MATRIX_ALLOCATE » alloue dynamiquement, généralement dans le tas (« HEAP » en anglais), l'espace mémoire pour y enregistrer la structure de données déclarée à l'aide de l'instruction « MATRIX_DEFINE » et retourne un pointeur qui pointe vers le début de cette structure de données. L'instruction « MATRIX_FREE » libère l'espace mémoire précédemment alloué par l'instruction « MATRIX_ALLOCATE ». Ces instructions « MATRIX_DEFINE », « MATRIX_ALLOCATE », « MATRIX_FREE » remplissent également des fonctions supplémentaires décrites plus en détail ci-dessous.

Ainsi, dans le listing de l'annexe 1, l'instruction « MATRIX_DEFINE (TYPE a) » déclare une matrice « a », dans laquelle chaque cellule contient une donnée ayant le type « TYPE ». Dans le code source 62, le type « TYPE » est égale au type « int » du langage C++. Ainsi, chaque cellule de la matrice « a » contient un entier.

L'instruction « MATRIX_ALLOCATE(TYPE, N0, N1, a) alloue un espace mémoire suffisamment grand pour y enregistrer la matrice "a " de N0 colonnes et N1 lignes et dans lequel chaque cellule contient une donnée du type « TYPE ».

L'instruction « MATRIX_FREE(a, N0, N1, TYPE) » libère l'espace mémoire précédemment alloué pour y enregistrer la matrice « a ». Ainsi, après l'exécution de cette instruction, d'autres données que celles de la matrice « a » peuvent être enregistrées dans cet espace mémoire libéré.

De plus, le langage V0 contient des instructions spécifiques pour accéder aux données d'une structure de données. Dans le cas particulier du code source 62, puisque les structures de données du code source 62 sont des matrices, ces instructions spécifiques sont notées « MATRIX_GET », « MATRIX_SET » et « MATRIX_ADD ».

L'instruction « MATRIX_GET(a, k, j) » renvoie la donnée stockée dans la cellule de la matrice « a » située à l'intersection de la ligne « j » et de la colonne « k ». Il s'agit donc d'une fonction de lecture d'une donnée dans une matrice.

L'instruction « MATRIX_SET(res, i, j, d) » enregistre la valeur « d » dans la cellule de la matrice « res » située à l'intersection de la ligne « j » et de la colonne « i ». Il s'agit donc d'une instruction d'écriture d'une donnée dans une matrice.

L'instruction « MATRIX_ADD(res, i, j, tmp_a*tmp_b) » ajoute le résultat de la multiplication scalaire des nombres tmp_a par le nombre tmp_b à la donnée contenue dans la cellule de la matrice « res » située à l'intersection de la ligne « j » et de la colonne « i ». Une fois cette instruction exécutée, la donnée précédemment contenue dans la cellule de la matrice « res » située à l'intersection de la ligne « j » et de la colonne « i » est remplacée par le résultat de cette addition. Cette instruction « MATRIX_ADD » est donc aussi une instruction d'écriture d'une donnée dans une matrice.

Le module 64 de compilation génère automatiquement à partir d'un code source d'un programme d'ordinateur, écrit en langage V0, un code exécutable 76 non-optimisé. Le code exécutable 76 est exécutable par le compilateur 40. À cet effet, il utilise le jeu d'instructions du langage machine du microprocesseur 56. Lors de la compilation du code source, le module 64 implémente, pour chaque structure de données déclarée dans le code source, un agencement standard prédéfini de cette structure de données dans la mémoire 58. Ainsi, lorsque le code exécutable 76 est exécuté par le microprocesseur 56, chaque structure de données est enregistrée dans la mémoire en utilisant le même agencement standard.

Par exemple, dans le cas où les structures de données sont des matrices, l'agencement standard de chaque matrice dans la mémoire 58 est un agencement en ligne, plus connu sous le terme anglais de « row layout ». L'agencement en ligne est un agencement dans lequel les lignes de la matrice sont enregistrées les unes après les autres dans la mémoire. Pour faire cela, à chaque fois que le module 64 rencontre une instruction spécifique « MATRIX_ALLOCATE », il la remplace par un jeu d'instructions correspondant au langage C++ qui code cet agencement en ligne. Par la suite ce jeu d'instructions correspondant est appelé "jeu d'instructions standard" car il code l'agencement standard de la structure de données.

Un exemple d'un tel jeu d'instructions standard en langage C++ qui code l'agencement en ligne de la matrice « a » est représenté dans les lignes 13 à 15 du listing de l'annexe 2. Un autre exemple de jeu d'instructions standard pour la matrice « res » est visible dans les lignes 21 à 23 du listing de l'annexe 2.

Le module 64 remplace aussi chacune des autres instructions spécifiques du code source 62 par un jeu d'instructions correspondant en langage C++ qui code la fonction correspondante. Par exemple, ici, comme illustré par le listing de l'annexe 2 :

- l'instruction spécifique « MATRIX_DEFINE(TYPE, a) » est remplacée par l'instruction « int **a » en langage C++,
- l'instruction « MATRIX_SET(res, i, j, 0) » est remplacée par l'instruction « res[j][i] = 0 » en langage C++,
- l'instruction spécifique « MATRIX_GET(a, k, j) » est remplacée par l'instruction « a[j][k] » en langage C++, et
- l'instruction « MATRIX_ADD(res, i, j, tmp_a*tmp_b) » est remplacée par l'instruction « res[j][i] + = tmp_a*tmp_b » en langage C++.

Après avoir remplacé dans le code source 62 chacune des instructions spécifiques par le jeu d'instructions standard correspondant, le module 64 obtient un code source intermédiaire entièrement écrit en langage C++. Le module 64 est capable de compiler, par exemple de façon conventionnelle, ce code source intermédiaire pour obtenir le code exécutable 76.

Ici, les instructions spécifiques qui accèdent à une donnée d'une structure de données sont en plus associées à un jeu d'instructions permettant d'implémenter le module 68 de relevé. Lors du remplacement de chaque instruction spécifique qui accède à une donnée d'une structure de données par le jeu d'instructions correspondant en langage C++, le module 64 ajoute également dans le code source intermédiaire un jeu d'instructions d'instrumentation associé à cette instruction spécifique d'accès. Typiquement, le jeu d'instructions d'instrumentation est ajouté dans le code source intermédiaire immédiatement avant ou après le jeu d'instructions correspondant à cette instruction spécifique d'accès. Le jeu d'instructions d'instrumentation est décrit plus en détail plus loin.

Le module 66 génère automatiquement, à partir du code source du programme d'ordinateur écrit en langage V0, un code exécutable 78 optimisé pour un calculateur cible donné. Le code exécutable 78 est exécutable par le calculateur cible. À cet effet, il utilise le jeu d'instructions du langage machine du microprocesseur du calculateur cible. Le code exécutable 78 n'est donc pas nécessairement exécutable par le compilateur 40 lorsque le jeu d'instructions du langage machine du calculateur cible est différent de celui du microprocesseur 56.

De plus, au moins pour certaines des structures de données déclarées dans le code source, le module 66 utilise un agencement optimisé différent de l'agencement standard. Ainsi, lorsque le calculateur cible exécute le code exécutable 78, il enregistre dans sa mémoire au moins une des structures de données selon un agencement optimisé différent de l'agencement standard choisi par défaut par le module 64 de compilation.

Par contre, dans ce mode de réalisation, le module 66 de compilation ne modifie pas l'ordre, défini par le code source, dans lequel les instructions d'accès sont exécutées. Autrement dit, lorsque les données traitées sont identiques, l'ordre dans lequel les instructions d'accès sont exécutées par le calculateur cible lorsqu'il exécute le code exécutable 78 est le même que l'ordre dans lequel ces instructions d'accès sont exécutées par le compilateur 40 lorsqu'il exécute le code exécutable 76.

Par exemple, pour cela, le module 66 remplace chaque instruction spécifique du code source 62 par le jeu d'instructions correspondant en langage C+ +. Sur ce point, le module 66 fonctionne de façon similaire à ce qui a été décrit dans le cas du module 64 de compilation. Toutefois, lorsqu'il rencontre une instruction spécifique « MATRIX_ALLOCATE » et lorsqu'il existe un agencement optimisé pour la structure de données à enregistrer dans l'espace mémoire alloué par cette instruction spécifique, il la remplace automatiquement par un jeu d'instructions optimisé au lieu de la remplacer par le jeu d'instructions standard. Le jeu d'instructions optimisé est un jeu d'instructions correspondant en langage C++ qui code l'agencement optimisé de la structure de données

Un exemple de jeu d'instructions optimisé est représenté dans les lignes 17 à 19 du listing de l'annexe 2. Dans ces lignes, l'agencement optimisé implémenté par le jeu d'instructions optimisé est un agencement dans lequel la matrice « b » est enregistrée dans la mémoire sous la forme d'une suite de colonnes. Cet agencement d'une matrice est connu sous le terme d'agencement en colonnes et plus connu sous le terme anglais de « column layout ».

Ainsi, le module 66 transforme automatiquement le code source 62 en un code source optimisé entièrement écrit en langage C++. Ensuite, le module 66 compile ce code source optimisé pour le calculateur cible. Cette compilation est par exemple, réalisée de façon conventionnelle.

Le module 68 de relevé est apte à relever, lors de l'exécution du code exécutable 76 par le compilateur 40, et pour au moins une structure de données déclarée dans le code source, le motif d'accès à cette structure de données.

Un motif d'accès est une suite ordonnée temporellement d'identifiants de position des données accédées les unes après les autres lors de l'exécution du code exécutable 76 par le microprocesseur 56. Ici, l'identifiant de position d'une donnée est choisi dans le groupe constitué :

- des indices qui permettent de repérer la position de la donnée à l'intérieur de la structure de données, et
- de l'adresse virtuelle de la donnée accédée.

L'identifiant de position est donc ici soit un indice soit une adresse virtuelle.

Les indices qui permettent de repérer la position de la donnée à l'intérieur de la structure de données sont généralement utilisés pour construire l'adresse virtuelle de cette donnée à partir d'une adresse de base de la structure de données et des valeurs de ces indices. L'adresse de base de la structure de données est typiquement l'adresse virtuelle à laquelle débute l'espace mémoire dans lequel est stockée cette structure de données. Ici chaque structure de données est située à l'intérieur d'une seule plage continue d'adresses virtuelles. Autrement dit, à l'intérieur de cette plage, il n'existe pas de données qui n'appartiennent pas à cette structure de données. Dans le cas d'une matrice à deux dimensions, les indices correspondent aux numéros de ligne et de colonne à l'intersection desquelles se situe la donnée à accéder. Dans cet exemple de mode de réalisation, les identifiants de position utilisés sont les numéros de ligne et de colonne de la donnée accédée dans la matrice.

Il est souligné ici que le module 68 de relevé relève le motif d'accès à une structure de données. Ainsi, si le code source comporte plusieurs structures de données pour lesquelles les motifs d'accès doivent être relevés, le module 68 relève au moins un motif d'accès pour chacune de ces structures de données. Le motif d'accès à une structure de données particulière comporte uniquement les identifiants de position des données accédées à l'intérieur de cette structure de données. Pour distinguer les différents motifs d'accès que le module 68 relève, chaque motif d'accès relevé est associé à l'identifiant de la structure de données pour laquelle ce motif d'accès a été relevé.

Dans ce mode de réalisation, le module 68 est implémenté en instrumentant le code exécutable 76. Pour cela, par exemple, chaque instruction spécifique du langage V0 qui est une instruction d'accès à une donnée d'une structure de données est associée à un jeu d'instructions d'instrumentation. Le jeu d'instructions d'instrumentation est écrit en langage C++. Il permet, lorsqu'il est exécuté par le microprocesseur 56, de relever le motif d'accès à une structure de données.

À cet effet, ici, les instructions « MATRIX_SET », « MATRIX_GET », « MATRIX_ADD » sont, chacune, associées à un jeu d'instructions d'instrumentation qui, lorsqu'il est exécuté par le microprocesseur 56 :

- relève l'identifiant de la structure de données accédée et l'identifiant de position de la donnée accédée à l'intérieur de cette structure de données, puis
- ajoute cet identifiant de position relevée à la suite des identifiants de position déjà relevés pour cette même structure de données afin de compléter le motif d'accès relevé pour cette structure de données.

Dans le cas d'une matrice à deux dimensions, l'exécution de ce jeu d'instructions d'instrumentation relève l'identifiant de la matrice accédée et les numéros de ligne et de colonne de la donnée accédée à l'intérieur de cette matrice. Ensuite, ces numéros de lignes et de colonnes relevées sont ajoutés, respectivement, à un premier et à un second motifs d'accès. Les premier et second motifs d'accès relevés contiennent seulement les numéros, respectivement, de ligne et de colonne des données accédées.

De plus, dans ce mode de réalisation, le module 68 relève la taille de chaque structure de données pour laquelle un motif d'accès est relevé. À cet effet, l'instruction spécifique qui alloue l'espace mémoire dans lequel la structure de données doit être enregistrée est aussi associée à un jeu d'instructions d'instrumentation, en langage C++. Dans le cas l'instruction spécifique d'allocation d'espace mémoire, le jeu d'instructions d'instrumentation permet, lorsqu'il est exécuter, de relever la taille de la structure de données et de l'associer à l'identifiant de cette structure de données. Ici cette instruction spécifique est l'instruction « MATRIX_ALLOCATE ». L'instruction « MATRIX_ALLOCATE » est paramétrée par le nombre de lignes et le nombre de colonnes de la matrice. Lorsque le jeu d'instructions d'instrumentation associé à l'instruction spécifique « MATRIX_ALLOCATE » est exécuté par le microprocesseur 56 :

- le microprocesseur 56 relève le nombre de lignes et le nombre de colonnes de la matrice, et
- associe ce nombre de ligne et de colonne relevé à l'identifiant de cette matrice.

Comme pour les autres jeux d'instructions d'instrumentation, ce jeu d'instructions d'instrumentation est automatiquement ajouté dans le code source intermédiaire, généré par le module 64, immédiatement avant ou après le jeu d'instructions en langage C++ correspondant à l'instruction spécifique « MATRIX_ALLOCATE » rencontrée. Ainsi, le code exécutable 76 est ici aussi instrumenté pour relever la taille de chaque structure de données pour laquelle un motif d'accès doit être relevé.

Le module 70 est apte à construire, à partir d'un motif d'accès relevé pour une structure de données, une signature caractéristique des accès à cette structure de données. Ici le module 70 est apte à construire une signature caractéristique :

- qui est indépendante du nombre d'accès à la structure de données au cours de la même exécution du code exécutable 76, et
- qui ne varie pas ou pratiquement pas d'une exécution à une autre du code exécutable 76.

À cet effet, le module 70 transforme le motif d'accès relevé en un motif d'accès transformé. Le motif d'accès transformé permet de faire ressortir une caractéristique propre à identifier le parcours de la structure de données. Dans ce mode de réalisation, le motif d'accès transformé est identique au motif d'accès relevé, sauf que chaque identifiant de position relevé est remplacé par un identifiant de position relative. L'identifiant de position relative d'une donnée repère la position de cette donnée par rapport à une autre donnée de la même structure de données. Pour cela, le module 70 applique à chaque identifiant de position relevé, une fonction de transformation notée $f_{t,m}$ qui transforme cet identifiant de position relevé en un identifiant de position relative. Dans ce mode de réalisation, la fonction $f_{t,m}$ :

- calcule un premier terme en fonction de l'identifiant de position relevé à remplacer,
- calcule un second terme en fonction d'un autre identifiant de position relevé appartenant au même motif d'accès relevé, puis
- calcule l'identifiant de position relative à partir de la différence entre ces premier et second termes.

Le premier terme est indépendant de l'identifiant de position utilisé pour calculer le second terme. De façon réciproque, le second terme est indépendant de l'identifiant de position à remplacer, utilisé pour calculer le premier terme.
Il existe un très grand nombre de fonctions $f_{t,m}$ possibles. La fonction $f_{t,m}$ permet d'obtenir une signature caractéristique apte à révéler un parcours particulier de la structure de données. Un parcours d'une structure de données est l'ordre temporelle dans lequel les données de la structure de données sont accédées, les unes après les autres, lors de l'exécution du programme d'ordinateur. Un parcours particulier est un parcours d'une structure de données qui est associé à un agencement optimisé de la structure de données par la base de données 74.
Selon l'architecture matérielle du calculateur cible, l'agencement optimisé de la structure de données qui permet d'améliorer la vitesse d'exécution pour un parcours particulier n'est pas forcément le même. En particulier, un agencement optimisé peut exister uniquement pour certaines architectures matérielles. Ainsi, ici, la fonction $f_{t,m}$ est aussi choisie en fonction de l'architecture matérielle du calculateur cible.
À cet effet, le module 70 est capable de sélectionner automatiquement, dans la base de données 72, une fonction $f_{t,m}$ correspondant à l'identifiant acquis de l'architecture matérielle du calculateur cible. A titre d'illustration, dans ce premier chapitre, seule une fonction de transformation, notée $f_{t,1}$, utilisable dans le cas où l'architecture du calculateur cible est celle décrite en référence à la figure 1 est présentée. D'autres exemples de fonction $f_{t,m}$ pour d'autres architectures matérielles de calculateurs cibles sont décrits dans le chapitre II.
Dans le cas du calculateur 4, pour accélérer l'exécution d'un programme d'ordinateur, il est préférable que les données de la structure de données soient enregistrées dans le même ordre que l'ordre dans lequel le microprocesseur 20 accède à ces données. En effet, comme décrit précédemment, la mémoire cache 22 est chargée avec des blocs entiers de données contiguës. Ainsi, si une donnée $D_1$ à accéder est chargée avec une donnée $D_2$ adjacente et si le programme d'ordinateur accède à la donnée $D_2$ immédiatement après la donnée $D_1$, cela ne provoque aucun défaut de cache et l'exécution du programme d'ordinateur est rapide. À l'inverse, si après avoir accédé à la donnée $D_1$, le microprocesseur accède systématiquement à une donnée $D_3$ de la même structure de données située dans la mémoire 6, à une position éloignée de la donnée $D_1$, cela provoque un défaut de cache et ralentit donc l'exécution du programme d'ordinateur. Dans le cas où la structure de données est une matrice, cela veut dire, par exemple, que si le programme d'ordinateur accède aux données de cette matrice ligne par ligne, alors l'agencement optimisé de la matrice en mémoire est l'agencement en ligne. À l'inverse, si le programme d'ordinateur accède aux données de la matrice colonne par colonne, alors l'agencement optimisé de cette matrice en mémoire est l'agencement en colonne. Ici, la fonction $f_{t,1}$ est donc choisie de manière à ce que le motif d'accès transformé obtenu permette de construire une signature caractéristique qui est représentative de l'ordre temporel dans lequel les données de la matrice sont accédées. À cet effet, la fonction $f_{t,1}$ est ici définie par les relations suivantes : $f_{t,1}(x_t) = (x_t - x_{t-1})$ et $f_{t,1}(y_t) = (y_t - y_{t-1})$, où :

- $f_{t,1}(x_t)$ et $f_{t,1}(y_t)$ sont les identifiants de positions relatives, respectivement, de la ligne et de la colonne de la donnée accédée,
- $x_t$ et $y_t$ sont les numéros, respectivement, de ligne et de colonne de la donnée accédée à l'instant t, et
- $x_{t-1}$ et $y_{t-1}$ sont les numéros, respectivement, de ligne et de colonne de la précédente donnée accédée dans la même matrice à l'instant t-1.

Dans le motif d'accès relevé, les indices $x_{t-1}$ et $y_{t-1}$ sont les indices qui précèdent immédiatement les indices $x_t$ et $y_t$.
Le module 70 est aussi capable de construire, pour chaque motif d'accès transformé, sa distribution statistique normalisée. Une distribution statistique comporte des classes de valeurs possibles et, associé à chacune de ces classes, un nombre relié, typiquement par une fonction bijective, au nombre d'occurrence de cette classe dans le motif d'accès transformé. Ici, la distribution statistique normalisée est la distribution statistique normalisée des identifiants de position relative contenus dans le motif d'accès transformé. Ici, chaque distribution statistique normalisée comporte des classes prédéfinies. Chaque classe prédéfinie correspond à une ou plusieurs valeurs possibles de l'identifiant de position relative. Il y a suffisamment de classes pour couvrir toutes les valeurs possibles de l'identifiant de position relative. Ici, chaque classe correspond à une seule valeur possible de l'identifiant de position relative.

À chaque classe, la distribution statistique associe une quantité fonction du nombre de fois où la valeur de l'identifiant de position relative correspondant à cette classe apparaît dans le motif d'accès transformé. Ici, la distribution statistique est « normalisée », c'est-à-dire que la somme des quantités associées à chacune des classes de la distribution statistique est égale à un. À cet effet, la quantité associée à une classe est obtenue :

- en comptant le nombre d'occurrences de cette classe dans le motif d'accès transformé, puis
- en divisant ce nombre d'occurrences de la valeur correspondant à cette classe dans le motif d'accès transformé par le nombre total d'identifiants de position relative contenus dans ce motif d'accès transformé.

La réunion des différentes distributions statistiques construites pour la même structure de données forme la signature caractéristique des accès à cette structure de données.

La base de données 72 associe chaque fonction $f_{t,m}$ à une ou plusieurs architectures matérielles de calculateur cible possible. Ainsi, lorsque le compilateur 40 a acquis l'identifiant de l'architecture matérielle du calculateur cible pour lequel le code source doit être compilé, le module 70 est apte à sélectionner automatiquement, dans la base 72 de données, la fonction $f_{t,m}$ à utiliser pour construire la signature caractéristique.

L'identifiant d'architecture matérielle identifie en particulier l'architecture matérielle des mémoires du calculateur cible. Dans ce mode de réalisation, l'architecture matérielle des mémoires désigne notamment leur structure matérielle mais aussi leur mode de fonctionnement. Par exemple, l'architecture matérielle du calculateur 4 est identifiée par l'identifiant $Id_{cc4}$. Un calculateur cible qui diffère du calculateur 4, uniquement par son module 24 de préchargement, est identifié par un identifiant différent de l'identifiant $Id_{cc4}$. En effet, le module 24 de préchargement est un élément clé de la gestion de la mémoire cache 22 et un agencement optimisé pour le calculateur 4 peut ne pas être optimal pour un calculateur cible identique, sauf qu'il utilise une autre stratégie de préchargement des données dans la mémoire cache 22.

La base 74 de données permet d'extraire une ou plusieurs signatures modèles associées à une fonction $f_{t,m}$ donnée. Ainsi, dans ce mode de réalisation, la fonction $f_{t,m}$ est aussi utilisée comme clé pour associer entre eux les enregistrements des tables 72 et 74. En particulier, c'est par l'intermédiaire de cette fonction $f_{t,m}$ qu'un identifiant d'architecture matérielle du calculateur cible est associé à un ou plusieurs modèles de signatures. Une signature modèle est structurellement identique à une signature construite par le module 70. Plus précisément, une signature modèle est identique à la signature qui est construite par le module 70 lorsqu'il utilise cette fonction $f_{t,m}$ donnée et lorsque le microprocesseur parcourt les données de la structure de données en suivant un parcours particulier. Pour une même structure de données, le nombre de parcours particuliers différents possibles augmente en fonction du nombre de données contenues dans cette structure de données. Le nombre de parcours particuliers différents possibles pour une même structure de données est donc généralement très grand. Par la suite pour simplifier la description, seules quelques exemples de parcours particuliers sont décrits en détail. Toutefois, l'enseignement donné dans le cas particulier de ces quelques exemples peut être appliqué et transposé à tout autre parcours particulier possible. Par exemple, dans le cas où la structure de données est une matrice, les parcours particuliers pour lesquels il est possible d'extraire une signature modèle à partir de la base de données 74 sont ici :

- Un parcours P1, c'est-à-dire un parcours ligne par ligne lors duquel les lignes de la matrice sont accédées les unes après les autres.
- Un parcours P2, c'est-à-dire un parcours colonne par colonne lors duquel les colonnes de la matrice sont accédées les unes après les autres.
- Un parcours P3, c'est-à-dire un parcours de la diagonale principale (« Diagonal Major » en anglais), lors duquel seule la diagonale principale de la matrice est accédée.
- Un parcours P4, c'est-à-dire un parcours par ligne de blocs de deux par deux, puis par colonne à l'intérieur de chacun de ces blocs.
- Un parcours P5, c'est-à-dire un parcours colonne par colonne en sautant toutes les colonnes dont le numéro de colonne est pair.

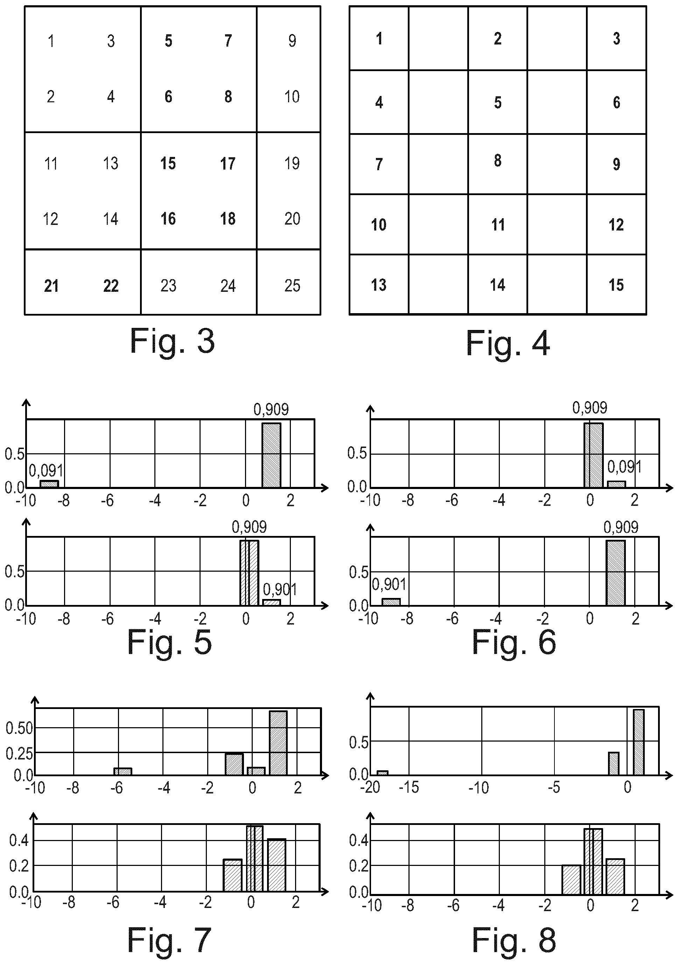

Des exemples des parcours P4 et P5 sont illustrés, respectivement, sur les figures 3 et 4. Dans ces figures, chaque chiffre est situé à l'intérieur d'une cellule de la matrice. Chaque chiffre indique le numéro d'ordre d'accès à cette cellule. Ainsi, l'accès aux cellules de ces matrices se fait selon l'ordre 1, 2, 3, 4... etc. Lorsqu'une cellule de la matrice ne comporte pas de numéro d'ordre, cela signifie que la donnée contenue dans cette cellule n'est pas accédée lors du parcours particulier de cette matrice. C'est notamment le cas du parcours particulier représenté sur la figure 4.

Généralement, pour un même parcours particulier d'une structure de données, la signature modèle varie en fonction de la taille de la structure de données. Ici, pour éviter d'enregistrer dans la base de données 74, pour chaque parcours particulier, autant de signatures modèles qu'il y a de tailles possibles pour la structure de données, la base de données 74 associe à chaque fonction $f_{t,m}$ un modèle de signature paramétré.

Ici, le paramètre du modèle de signature est la taille de la structure de données pour laquelle une signature modèle doit être extraite. Le modèle paramétré de signature est ici implémenté sous la forme d'un code exécutable par le microprocesseur 56. Ce modèle paramétré de signature génère, lorsqu'il est exécuté pour une valeur particulière du paramètre, la signature modèle correspondant à ce parcours particulier d'une structure de données de cette taille.

Les annexes 3 à 6 donnent les listings, en langage PYTHON, des modèles de signature correspondant aux parcours particuliers, respectivement, P1, P2, P3 et P4. Les figures 5 à 8 représentent les signatures modèles générées, après normalisation, par, respectivement :

- le modèle de signature de l'annexe 3 pour une matrice de dix lignes et de dix colonnes,
- le modèle de signature de l'annexe 4 pour une matrice de dix lignes et de dix colonnes,
- le modèle de signature de l'annexe 6 pour une matrice de sept lignes et de quatorze colonnes, et
- le modèle de signature de l'annexe 6 pour une matrice de vingt lignes et de vingt colonnes.

Dans ce mode de réalisation, pour une matrice, un premier motif d'accès transformé est obtenu à partir des numéros de ligne relevés et un second motif d'accès transformé est obtenu à partir des numéros de colonne relevés. Ainsi, dans ce mode de réalisation particulier, la signature caractéristique des accès à cette matrice comporte une première et une seconde distributions statistiques normalisées construite à partir, respectivement, des premier et second motifs d'accès transformés. De façon similaire, chaque signature modèle comporte donc une première et une seconde distributions statistiques. Chacune des figures 5 à 8 représente, en haut, la première distribution statistique et en bas la seconde distribution statistique. Sur chacune des figures 5 à 8, l'axe des abscisses représente les différentes valeurs possibles de l'identifiant de position relative et l'axe des ordonnées représente la quantité associée à chaque valeur de l'axe des abscisses. Les chiffres indiqués à côté de certaines barres des distributions statistiques représentées correspondent à la hauteur de cette barre.

Comme le montrent les figures 7 et 8, pour un même parcours particulier, la signature modèle varie en fonction de la taille de la matrice.

Dans les listings des annexes 3 à 6, les notations suivantes sont utilisées :

- « dimX » est le nombre de lignes de la matrice ;
- « dimY » est le nombre de colonnes de la matrice ;
- « deltaX » est un tableau qui contient les classes associées à une quantité non nulle dans la distribution statistique ;
- « deltaY » est un tableau qui contient les quantités non nulles associées à une classe de la distribution statistique ;
- « nbBlock_Y_ceil » est égal au nombre de bloc dans une colonne de la matrice.

Le langage PYTHON est un langage bien connu de l'homme du métier et bien documenté. Par conséquent, l'homme du métier est capable de comprendre et d'implémenter les différents modèles de signature donnés dans les annexes 3 à 6 sans explication complémentaire. De plus, pour simplifier ces listings, l'opération de normalisation de chacune des distributions statistiques de la signature modèle n'a pas été représentée. Cette opération de normalisation consiste typiquement à diviser chaque nombre d'occurrences de chaque distribution statistique par le nombre total de données accédées lors du parcours particulier de la matrice.

Les modèles de signature représentés dans les annexes 3 à 6 ont été établis en comparant, pour un même parcours particulier, différentes signatures construites en utilisant la fonction $f_{t,1}$, pour différentes tailles de la matrice. Cette comparaison permet d'identifier la ou les quantités de la distribution statistique qui varient en fonction de la taille de la matrice. Par exemple, dans le cas du parcours P1, ce qui varie en fonction de la taille de la matrice, c'est l'identifiant de position relative calculé au moment où l'on passe à la ligne suivante. Il peut facilement être observé qu'à ce moment-là, pour l'indice $x_t$, l'identifiant de position relative $f_{t,1}(x_t)$ est égal à 1-dimX. Le nombre d'occurrences de saut de ligne est quant à lui égal à dimY-1.

Il peut aussi être observé qu'en dehors de ces moments-là, l'indice $x_t$ est seulement incrémenté de 1 à chaque instant t. Dans ce cas, l'identifiant de position relative $f_{t,1}(x_t)$ calculé est égal à 1 et le nombre d'occurrences de la valeur « 1 » dans le motif d'accès transformé est égal à dimY*(dimX-1).

Dans le cas de parcours plus complexes, comme le parcours P4, le modèle de signature peut être construit en décomposant ce parcours plus complexe sous la forme d'une composition de plusieurs parcours particuliers simples. Par exemple, le parcours P4 peut être décomposé en :

- un parcours ligne par ligne des blocs, et
- un parcours colonne par colonne à l'intérieur de chaque bloc.

Le modèle de signature du parcours P4 est donc établi en composant les modèles de signature du parcours P1 avec le modèle de signature du parcours P2. Le fait de générer des signatures modèles en combinant entre eux plusieurs modèles de signatures permet, pour un même nombre de signatures modèles aptes à être générées, de réduire substantiellement le nombre de modèles de signatures et donc de réduire la taille de la base de données 74.

Les annexes 3 à 6 sont des modèles de signature paramétrés établis pour quelques exemples de parcours particuliers. Toutefois, en appliquant la même méthodologie, il est possible de construire un modèle de signatures paramétré pour tout autre parcours particulier. La méthodologie décrite ici permet aussi d'établir des modèles de signature par tous types de structures de données et n'est pas limitée au cas des matrices.

La base de données 74 associe également à chaque modèle de signatures un agencement optimisé de la structure de données. La littérature scientifique divulgue, pour un grand nombre de parcours particuliers différentes, l'agencement optimisé de la structure de données qui permet d'accélérer l'exécution du programme d'ordinateur par le calculateur cible. La base de données 74 associe, à chaque modèle de signature établi pour un parcours particulier, l'agencement optimisé correspondant à ce parcours particulier. De préférence, la base de données 74 comporte donc plusieurs, et de préférence plus de cinq ou dix, modèles de signature, associés chacun à un agencement optimisé respectif. Ici, pour simplifier la description et parce que les agencements optimisés sont connus, seuls trois exemples d'agencements optimisés sont décrits plus en détail. L'implémentation d'un agencement optimisé décrit dans le cas particulier de ces exemples peut être transposé sans difficulté, par l'homme du métier, à tout autre agencement optimisé connu. Pour des exemples d'autres agencements optimisés connus associables à d'autres modèles de signature susceptibles d'être intégrés à la base de données 74, le lecteur peut consulter les articles suivants :

- Ilya Issenin et Al. "Multiprocessor system-on-chip data reuse analysis for exploring customized memory hierarchies", 2006, 43rd ACM/IEEE Design Automation Conference. IEEE, p49-52;
- Doosan Cho et Al : "Compiler driven data layout optimization for regular/irregular array access patterns", ACM Sigplan Notices, Vol. 43. ACM, 41-50, 2008.

Dans ce mode de réalisation, chaque agencement optimisé se présente sous la forme d'une table de conversion qui, à chaque instruction spécifique du langage V0, associe à un jeu générique d'instructions à partir duquel les modules 64 et 66 peuvent générer le jeu d'instructions correspondant en langage C++.

Ce jeu est dit « générique », car il contient des paramètres qui sont remplacés par des valeurs ou des noms de variables du code source 62 au moment de la génération du code source intermédiaire par les modules 64 et 66.

Trois exemples de tables de conversion sont données dans les annexes 7 à 9.

La table de conversion de l'annexe 7 contient dans la première colonne l'instruction spécifique en langage V0 et, dans la seconde colonne, le jeu générique d'instructions qui lui est associé. Le jeu générique d'instructions est celui utilisé par les modules 64 et 66 pour générer le jeu d'instructions correspondant en langage C+ +. Chaque instruction spécifique contenue dans le code source 62 contient, pour chacun des paramètres du jeu générique qui lui est associé, une valeur ou le nom d'une variable. Lorsque les modules 64 et 66 remplacent l'instruction spécifique en langage V0 par le jeu d'instructions correspondant en langage C++, ils remplacent les paramètres du jeu générique d'instructions, associé à cette instruction spécifique par cette table de conversion, par les valeurs ou les noms de variables contenus dans l'instruction spécifique du code source 62.

Ainsi, on peut observer que le jeu générique d'instructions associé par la table de l'annexe 7 à l'instruction spécifique « MATRIX_ALLOCATE » est identique à celui représenté dans les lignes 13 à 15 du listing de l'annexe 2, sauf que le type des données de la matrice, le nombre de lignes de la matrice, le nombre de colonnes de la matrice et le nom de la matrice sont remplacés par les paramètres, respectivement « TYPE », « NDL », « NDC », « NAME ». Ainsi, l'agencement optimisé de l'annexe 7 est un agencement dans lequel la matrice est enregistrée dans la mémoire sous la forme d'une suite de lignes.

L'annexe 8 représente la table de conversion correspondant à l'agencement optimisé associé, par la base de données 74, à la fonction $f_{t,1}$ et au modèle de signature de l'annexe 4. Cette table est identique à la table de l'annexe 7, sauf que le jeu générique d'instructions associé à l'instruction spécifique « MATRIX_ALLOCATE » enregistre la matrice dans la mémoire sous la forme d'une suite de colonnes et non pas sous la forme d'une suite de lignes.

L'annexe 9 représente la table de conversion correspondant à l'agencement optimisé associé, par la base de données 74, à la fonction $f_{t,1}$ et au modèle de signature du parcours P3.

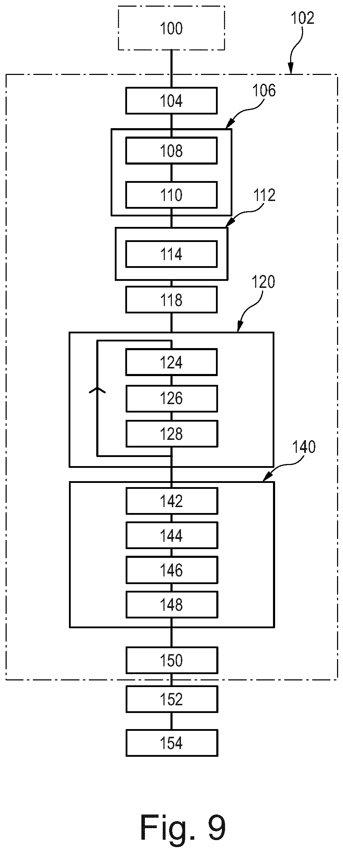

Le fonctionnement du compilateur 40 va maintenant être décrit en référence au procédé de la figure 9.

Initialement, lors d'une phase 100 de conception, un développeur écrit, en langage V0, le code source 62 du programme d'ordinateur. Ce code est écrit sans spécifier l'agencement des structures de données en mémoire. Ainsi, l'écriture de ce code source est conventionnelle, sauf que pour au moins une des structures de données de ce code source, le développeur utilise les instructions spécifiques du langage V0 au lieu d'utiliser des instructions conventionnelles du langage C++. Par exemple, dans le cas du code source 62 de l'annexe 1, chaque création d'une matrice et chaque accès aux données des matrices sont codés en utilisant les instructions spécifiques du langage V0.

Une fois le code source 62 écrit, une phase 102 de compilation du code source 62 par le compilateur 40 débute. Cette phase 102 débute par une étape 104 de fourniture du code source 62 et de fourniture des bases de données 72 et 74. À l'issue de cette étape, le code source 62 et les bases de données 72 et 74 sont enregistrés dans la mémoire 58 du compilateur 40.

Ensuite, lors d'une étape 106, le module 64 de compilation génère le code exécutable 76 à partir du code source 62.

Pour cela, lors d'une opération 108, le module 64 transforme le code source 62 en un code source intermédiaire instrumenté, uniquement écrit en langage C++. Cette transformation consiste ici à remplacer chaque instruction spécifique du langage V0 du code source 62 par la concaténation du jeu d'instructions correspondant en langage C++ et du jeu d'instructions d'instrumentation associé à cette instruction spécifique. Par défaut, lors de cette première compilation du code source 62, pour chaque structure de données du code source 62, c'est le jeu d'instructions standard qui est utilisé. Pour faire cela, le module 64 utilise donc systématiquement la table de conversion de l'annexe 7. Par conséquent, dans ce mode de réalisation, chaque structure de données est enregistrée dans la mémoire, lors de l'exécution du code exécutable, en utilisant l'agencement standard.

A l'issue de l'opération 108, le code source intermédiaire instrumenté est uniquement rédigé en langage C++ et comporte pour chaque structure de données, les instructions qui permettent de relever l'identifiant de cette structure de données et les identifiants de position des données accédées à l'intérieur de cette structure de données.

Lors d'une opération 110, le code source intermédiaire obtenu à l'issue de l'opération 108 est compilé pour générer le code exécutable 76.

Lors d'une étape 112, le microprocesseur 56 du compilateur 40 exécute le code exécutable 76.

Lors de cette exécution, le microprocesseur 56 alloue dynamiquement pour chaque structure de données un espace mémoire pour y enregistrer les données de cette structure de données. Ensuite, le microprocesseur accède aux données de la structure de données dans l'ordre défini dans le code source 62 et donc selon un parcours codé par le développeur du code source 62. Enfin, le microprocesseur libère l'espace mémoire alloué dynamiquement lorsque la structure de données n'est plus utilisée.

En réponse à l'allocation dynamique d'un espace mémoire pour y enregistrer une structure de données, un pointeur vers le début de cet espace mémoire est généré. Ce pointeur est typiquement égal à une adresse virtuelle appelée ici « adresse virtuelle de base » à laquelle débute cet espace mémoire. Ici, ce pointeur constitue l'identifiant de la structure de données ou est associé à l'identifiant de la structure de données.

Lors de chaque accès à une donnée de la structure de données, le microprocesseur 56 commence par construire l'adresse virtuelle de cette donnée à partir de l'adresse de base et des valeurs des indices qui repèrent la position de cette donnée à l'intérieur de la structure de données.

Ensuite, il exécute l'instruction d'accès à cette donnée. Cette instruction d'accès peut être une instruction d'écriture ou de lecture de la donnée. Cette instruction d'accès contient un opérande à partir duquel l'adresse virtuelle de la donnée accédée est obtenue. Ces instructions correspondent ici aux instructions codées dans les lignes 29 et 32 à 34 du listing de l'annexe 1.

Entre deux accès aux données de la structure de données, le microprocesseur exécute une instruction qui modifie le ou les indices de sorte que lors de l'exécution de la prochaine instruction d'accès, c'est la donnée suivante de la structure de données qui est accédée. Dans le listing de l'annexe 1, cela correspond à l'incrémentation des indices j, i et k visibles dans les lignes, respectivement, 25, 27 et 30 de ce listing.

Lors de cette exécution du code exécutable 76, le microprocesseur 56 exécute aussi les instructions correspondant aux jeux d'instructions d'instrumentation introduits dans le code source intermédiaire par le module 64 de compilation. Ainsi, lors de l'étape 112, le module 68 de relevés des motifs d'accès est aussi exécuté par le microprocesseur 56 en même temps que le code exécutable 76.

Dès lors, lors d'une opération 114, à chaque fois que le microprocesseur 56 accède à une donnée d'une structure de données, le module 68 relève :

- l'identifiant de cette structure de données, et
- les identifiants de position de la donnée accédée à l'intérieur de cette structure de données.

Dans ce mode de réalisation, les identifiants de la position de la donnée correspondent, respectivement, au numéro de ligne $x_t$ et au numéro de colonne $y_t$ à l'intersection desquels se situe la donnée accédée. Dans le listing de l'annexe 1, cela correspond donc aux valeurs de deux des indices choisis parmi les indices i, j et k qui sont utilisés, dans le code source, pour désigner les numéros de ligne et de colonne.

Ensuite, le module 68 ajoute au motif d'accès construit spécifiquement pour cette structure de données, les valeurs relevées des indices. Ainsi, par exemple, à chaque fois que la matrice « a » du code source 62 est accédée, le module 68 relève les valeurs des indices $x_{a,t}$, $y_{a,t}$ de la donnée accédée dans cette matrice. Ici, les indices $x_{a,t}$ et $y_{a,t}$ correspondent, respectivement, aux valeurs des variables k et j de la ligne 32 du listing de l'annexe 1. Ensuite, le module 68 ajoute à un motif d'accès $MA_{xa}$ spécifiquement associé à la matrice « a » et contenant les précédentes valeurs relevées pour l'indice $x_{a,t}$, la nouvelle valeur relevée. Ainsi, le motif d'accès $MA_{xa}$ se présente sous la forme d'une suite $\{x_{a,1} ; x_{a,2} ;... ; x_{a,t}\}$ de numéros de ligne classés dans l'ordre des instants où ces numéros ont été relevés.

En parallèle, le module 68 ajoute, à un second motif d'accès $MA_{ya}$ spécifiquement associé à la matrice « a » et contenant les précédentes valeurs relevées pour l'indice $y_{a,t}$, la nouvelle valeur relevée. Ainsi, ce motif d'accès $MA_{ya}$ se présente sous la forme d'une suite $\{y_{a,1} ; y_{a,2} ;... ; y_{a,t}\}$ de numéros de colonne classés dans l'ordre des instants où ces numéros ont été relevés.

De plus, dans ce mode de réalisation, à chaque fois qu'un espace mémoire est dynamiquement alloué pour y enregistrer une structure de données, le module 68 relève la taille de cet espace mémoire. Ici, dans le cas où les structures de données sont des matrices à deux dimensions, le module 68 relève le nombre de lignes dimX et le nombre de colonnes dimY et les associe à l'identifiant de cette matrice. Cette information est par exemple enregistrée dans la mémoire 58.

Une fois que l'exécution du code exécutable 76 est terminée, lors d'une étape 118, le compilateur 40 acquiert un identifiant de l'architecture matérielle du calculateur cible pour lequel il faut compiler le code source 62. Ici, cet identifiant est acquis par l'intermédiaire de l'interface Homme-Machine 42. Pour la suite de cette description, on suppose que l'identifiant d'architecture matérielle acquis lors de l'étape 118 est l'identifiant $Id_{cc4}$ de l'architecture matérielle du calculateur 4 de la figure 1. Il s'agit donc d'un identifiant d'une architecture matérielle avec trois niveaux de mémoire cache et un module 24 de préchargement qui charge des blocs entiers de données contiguës dans la mémoire cache 22.

Ensuite, lors d'une étape 120 et après la fin de l'exécution du code 76, le module 70 construit pour chaque structure de donnée la signature caractéristique des accès à cette structure de données.

Pour cela, lors d'une opération 124, le module 70 sélectionne la fonction $f_{t,m}$ associée, par la base de données 72, à l'identifiant de l'architecture matérielle acquis lors de l'étape 118. Ici, il s'agit de la fonction $f_{t,1}$.

Lors d'une opération 126, le module 70 transforme alors chacun des motifs d'accès relevés pour une structure de données en un motif d'accès transformé en appliquant la fonction $f_{t,1}$ sélectionnée. Ainsi, dans le cas de la matrice « a », les motif d'accès $MA_{xa}$ et $MA_{ya}$ sont transformés en motifs d'accès transformés, respectivement, $MAT_{xa}$ et $MAT_{ya}$.

Le motif d'accès $MAT_{xa}$ est égal à la suite d'identifiants de position relative $\{f_{t,1}(x_2) ; f_{t,1}(x_3) ;... ; f_{t,1}(x_{a,n})\}$, c'est-à-dire égal à la suite $\{x_{a,2}\text{-}x_{a,1} ; x_{a,3}\text{-}x_{a,2} ;... ; x_{a,n}\text{-}x_{a,\,n-1}\}$, où n est égal au nombre total d'éléments du motif d'accès $MA_{xa}$. De façon similaire, le motif $MAT_{ya}$ est égal à la suite $\{f_{t,1}(y_{a,2}) ; f_{t,1}(y_{a,3}) ;... ; f_{t,1}(y_{a,n})\}$, c'est-à-dire égal à la suite $\{y_{a,2}\text{-}y_{a,1} ; y_{a,3}\text{-}y_{a,2} ;... ; y_{a,n}\text{-}y_{a,\,n-1}\}$.

Ensuite, lors d'une opération 128, le module 70 construit les distributions statistiques normalisées $DS_{xa}$ et $DS_{ya}$ des valeurs, respectivement, des motifs d'accès $MAT_{xa}$ et $MAT_{ya}$.

La construction de la distribution statistique est conventionnelle. La normalisation de la distribution statistique construite consiste ici à diviser le nombre d'occurrence de chaque classe dans le motif d'accès transformé, par le nombre n-1 d'éléments de ce motif d'accès transformé.

La réunion des distributions statistiques $DS_{xa}$ et $DS_{ya}$ constitue la signature caractéristique construite pour les accès à la matrice « a » lors de l'exécution du code exécutable 76 par le microprocesseur 56.

Les opérations 124 à 128 sont réitérées pour chacune des structures de données pour lesquelles le module 68 a relevé des motifs d'accès lors de l'étape 112.

Une fois que la signature caractéristique a été construite pour chacune des structures de données accédées, le compilateur 40 procède à une étape 140 d'optimisation automatique du programme d'ordinateur pour le calculateur cible. Pour cela, pour chaque structure de données, il procède comme suit.

Lors d'une opération 142, le module 66 de compilation extrait de la base de données 74 les différentes signatures modèles susceptibles de correspondre à la signature construite pour cette structure de données. Ici, à cet effet, il sélectionne dans la base de données 74, les modèles de signature associés à la fonction $f_{t,1}$ utilisée pour construire la signature. En faisant cela, le module 66 sélectionne donc des modèles de signature qui sont associés à la même architecture matérielle que celle du calculateur 4.

Puis, à l'aide de chaque modèle de signatures sélectionné et en remplaçant dans ce modèle de signature les variables dimX et dimY par les valeurs relevées lors de l'opération 114, le compilateur 40 construit la signature modèle d'un parcours particulier des données à l'intérieur d'une matrice de même taille.

Lorsque le modèle de signature sélectionné comporte une variable dont la valeur n'est pas connue, alors le module de compilation 66 exécute ce modèle de signature pour chacune des valeurs possibles de cette variable. Ainsi, dans ce cas, à partir d'un même modèle de signature et pour la même taille de la structure de données, plusieurs signatures modèles sont générées. C'est par exemple le cas, lorsque le modèle de signatures de l'annexe 6 est sélectionné. En effet, ce modèle de signature comporte la variable « nbBlock_Y_ceil » dont la valeur n'est pas relevée par le module 68. Les valeurs possibles de la variable « nbBlock_Y_ceil » sont les nombres entiers compris entre 1 et dimY.

Lors d'une opération 144, le module 66 de compilation compare la signature construite à chaque signature modèle extraite de la base de données 74 lors de l'opération 142.

Ici, pour faire cette comparaison entre la signature construite et la signature modèle, le module 66 calcule un coefficient de corrélation entre chaque distribution statistique de la signature construite et la distribution statistique correspondante de la signature modèle. Dans ce mode de réalisation, ce coefficient de corrélation est une adaptation du coefficient connu sous le terme de « coefficient de Pearson ». Ce coefficient est défini par la relation (1) suivante :

$$\rho\left(DS_c, DS_m\right) = \frac{1}{N} \frac{\displaystyle\sum_{i=0}^{N-1} \left(DS_c[i] - E_{DSc}\right)\left(DS_m[i] - E_{DSm}\right)}{\sigma_s \sigma_{s'}}$$

où :

- $\rho(DS_c, DS_m)$ est le coefficient de corrélation,
- $DS_c$ et $DS_m$ sont, respectivement, la distribution statistique construite et la distribution statistique modèle comparées,
- $N$ est le nombre total de classes de la distribution statistique comparée,
- $DS_c[i]$ est la quantité associée à la $i^{ème}$ classe par la distribution statistique $DS_c$,
- $DS_m[i]$ est la quantité associée à la $i^{ème}$ classe par la distribution statistique $DS_m$,
- $E_{DSc}$ et $E_{DSm}$ sont les espérances mathématiques, respectivement, des distributions statistiques $DS_c$ et $DS_m$,
- $\sigma_{DSc}$ et $\sigma_{DSm}$ sont les écarts types, respectivement, des distributions statistiques $DS_c$ et $DS_m$.

Ensuite, le coefficient de corrélation entre la signature construite et une signature modèle est pris égal à la moyenne des coefficients de corrélation calculés pour chacune des distributions statistiques de la signature construite.

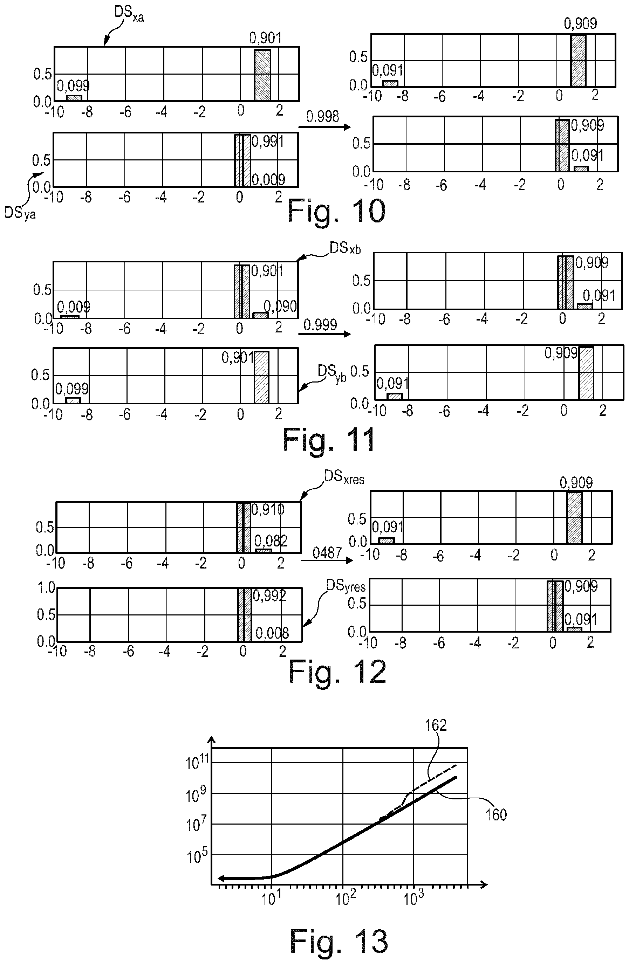

La figure 10 représente, à gauche, les deux distributions statistiques $DS_{xa}$ et $DS_{ya}$ construites pour la matrice « a » lors de l'étape 120 dans le cas où la taille de la matrice « a » est de dix lignes et de dix colonnes.

La figure 10 représente, à droite, les deux distributions statistiques de la signature modèle extraite de la base de données 74 et qui présentent le coefficient de corrélation le plus élevé avec la signature construite. Dans ce cas, il s'agit de la signature modèle générée par le modèle de signature de l'annexe 3, c'est-à-dire celui correspondant au parcours P1. La figure 10 représente également, à gauche, les deux distributions statistiques de la signature caractéristique construite pour la matrice « a » lorsque celle-ci comporte dix lignes et dix colonnes. La valeur numérique au-dessus de la flèche qui pointe de la signature construite vers la signature modèle est la valeur du coefficient calculé de corrélation entre la signature construite et la signature modèle.

Les figures 11 et 12 sont identiques à la figure 10, sauf que la matrice « a » est remplacée par, respectivement, les matrices « b » et « res » du code source 62. Dans ce cas, les matrices « b » et « res » sont des matrices de dix lignes et de dix colonnes.

La figure 11 montre que la signature caractéristique des accès à la matrice « b » présente une très forte corrélation avec la signature modèle générée à partir du modèle de signature de l'annexe 4, c'est-à-dire celui correspondant au parcours particulier P2 d'une matrice.

La figure 12 montre que la signature modèle qui est le plus fortement corrélée avec la signature construite pour la matrice « res » est à nouveau celle générée à partir du modèle de signature de l'annexe 3.

A la fin de l'opération 144, pour chaque structure de données, le module 66 identifie la signature modèle qui correspond le mieux à la signature caractéristique construite pour cette structure de données. Pour cela, le module 66 retient la signature modèle qui présente le plus fort coefficient de corrélation avec la signature construite pour cette structure de données. Par la suite, la signature modèle ainsi identifiée est appelée signature modèle "correspondant à la signature caractéristique construite".

Lors d'une opération 146, pour chaque structure de données, le module 66 sélectionne automatiquement l'agencement optimisé qui est associé, par la base de données 74, au modèle de signature utilisé pour générer la signature modèle correspondant à cette structure de données. Ainsi, au vu des résultats illustrés sur les figures 10 à 12, le module 66 sélectionne l'agencement optimisé de l'annexe 7 pour les matrices « a » et « res » et l'agencement optimisé de l'annexe 8 pour la matrice « b ».

Ensuite, lors d'une opération 148, le module 66 remplace chaque instruction spécifique qui manipule une structure de données particulière dans le code source 62 par un jeu d'instructions correspondant en langage C++. Le jeu d'instructions correspondant est généré à partir du jeu générique d'instructions associé à cette instruction spécifique par la table de conversion sélectionnée pour cette structure de données lors de l'opération 146. Plus précisément, le jeu d'instructions correspondant en langage C++ est obtenu en remplaçant les différents paramètres du jeu générique d'instructions par les valeurs des paramètres de l'instruction spécifique.

Par exemple, l'instruction spécifique « MATRIX_ALLOCATE (TYPE, N0, N1, a) » de la ligne 13 du code source 62 comporte les valeurs suivantes « TYPE », « N0 », « N1 » et « a » des paramètres « TYPE », « NBL », « NBC », « NAME » du jeu générique d'instructions associé à cette instruction spécifique par la table de conversion de l'annexe 7. Dès lors, après remplacement des paramètres du jeu générique d'instructions par ces valeurs, le module 66 obtient le jeu d'instructions correspondant en langage C++ représenté dans les lignes 13 à 15 du listing 2. En faisant de même pour l'instruction spécifique de la ligne 17 du code source 62 et en utilisant cette fois-ci la table de conversion de l'annexe 8, le module 66 obtient un jeu d'instructions correspondant en langage C++ représenté dans les lignes 17 à 19 du listing de l'annexe 2.

Ainsi, à la fin de l'opération 148, le module 66 obtient un code source intermédiaire dans lequel l'agencement des structures de données est optimisé. Dans le cas du code source 62, le code source ainsi obtenu est celui de l'annexe 2.

Ensuite, lors d'une étape 150, le module 66 compile le code source intermédiaire obtenu à l'issue de l'étape 140 pour le calculateur cible 4. Cette étape est, par exemple, réalisée de façon conventionnelle. À l'issue de l'étape 150, le code exécutable 78 optimisé a été généré.

Lors d'une étape 152, le code exécutable 78 est chargé dans la mémoire 8 de l'unité 2 de calcul et devient le code exécutable 12, exécuté par le calculateur 4.

Lors d'une étape 154, le calculateur 4 exécute le code exécutable 12 généré par le compilateur 40.

Différents essais ont été réalisés pour vérifier que le code exécutable 78 généré par le compilateur 40 permettait effectivement d'améliorer les performances du calculateur 4 lorsque celui-ci exécute ce code exécutable 78.

La figure 13 représente l'évolution, en fonction de la taille des matrices « a », et « b » du temps nécessaire pour réaliser la multiplication de ces matrices, lorsque le calculateur 4 exécute le code exécutable 78 (ligne 160) et lorsque le calculateur 4 exécute un code exécutable conventionnel (ligne 162). Le code exécutable conventionnel est obtenu en compilant un code source, identique au code source 62, avec un compilateur C++ conventionnel. Pour ces essais, les matrices « a », « b » et « res » sont des matrices carrées de même dimension et l'axe des abscisses indique seulement le nombre de lignes de la matrice « a ». Dans la figure 13, le temps d'exécution de la multiplication est mesuré en comptant le nombre de cycles d'horloge du microprocesseur 20.

La figure 13 montre que pour des matrices de taille assez importante, c'est-à-dire ici ayant plus de mille lignes, le calculateur 4 réalise le même calcul dix fois plus rapidement lorsqu'il exécute le code exécutable 78 que lorsqu'il exécute le code exécutable conventionnel.

D'autres essais avec d'autres codes sources implémentant d'autres traitements informatiques qui manipulent des matrices ont été réalisés. Dans la plupart de ces cas, le code exécutable généré par le compilateur 40 s'est révélé être plus rapide qu'un code exécutable généré par un compilateur conventionnel. Plus précisément, dans la plupart des cas, le code exécutable généré par le compilateur 40 s'exécute de quatre à cinquante fois plus rapidement que le même code exécutable mais généré de façon conventionnelle. Il a aussi été observé que dans le pire des cas, le code exécutable généré par le compilateur 40 s'exécute à la même vitesse que le code exécutable généré de façon conventionnelle.

Toujours pour tester le compilateur 40, le code source 62 a été modifié en ajoutant des instructions qui génèrent des accès aléatoires aux matrices « a », « b » et « res ». Par exemple, lors de chaque accès aléatoire, les valeurs des numéros de ligne et de colonne de la donnée accédée sont tirés de façon aléatoire ou pseudo-aléatoire. Ainsi, les accès aléatoires ne peuvent pas correspondre à un parcours particulier de la structure de données et, au contraire, ajoute du bruit dans la signature caractéristique construite. Dans les essais réalisés, le taux d'accès aléatoires à chaque matrice a été progressivement augmenté de 0 % jusqu'à 50 %. Le taux d'accès aléatoire à une matrice est le rapport entre le nombre d'accès aléatoire et le nombre total d'accès à cette matrice au cours d'une exécution du programme d'ordinateur. Ces essais ont montré que pour un taux d'accès aléatoire inférieur ou égal à 20 %, le module 66 arrive encore pour chaque matrice « a » et « b » et « res », à sélectionner le bon agencement optimisé. Ainsi, le compilateur 40 reste avantageux même si les signatures construites pour les accès aux matrices « a », « b » et « res » sont bruitées.

Chapitre II : Autres exemples d'architecture matérielle

Jusqu'à présent, le mode de réalisation du compilateur 40 a été illustré dans le cas particulier où l'architecture matérielle du calculateur cible est celle décrite en référence à la figure 1. Toutefois, ce qui a été précédemment décrit peut être adapté à tout type d'architecture matérielle. En particulier, il existe des calculateurs électroniques où pour obtenir un code exécutable plus rapide, d'autres agencements optimisés que ceux précédemment décrits doivent être mis en œuvre. Pour cela, à chaque fois, le compilateur 40 doit être adapté pour gérer cette architecture matérielle. Les adaptations réalisées pour adapter le compilateur 40 à d'autres architectures matérielles de calculateur cible sont obtenues selon la méthodologie suivante :

1) Identifier, par exemple en consultant la littérature spécifique à cette architecture matérielle, au moins un agencement d'une structure de données qui améliore la vitesse d'exécution du calculateur cible lorsque celui-ci accède aux données de cette structure en suivant un parcours particulier.

2) Établir une fonction $f_{t,m}$ de manière à obtenir un motif d'accès transformé qui permet de construire une signature caractéristique apte à identifier l'existence et, en alternance, l'absence de ce parcours particulier identifié au point 1) ci-dessus. Ici, on considère que la signature construite est apte à caractériser l'existence et, en alternance, l'absence du parcours particulier si la signature construite, lorsque l'accès aux données se fait selon le parcours particulier, est différente de la signature construite en absence de ce parcours particulier.

3) Construire un modèle de signature qui génère la signature modèle qui doit être extraites de la base de données 74. La signature modèle est identique à la signature caractéristique construite lorsque le programme d'ordinateur exécuté parcours la structure de données selon le parcours particulier identifié au point 1). Ce modèle de signature est associé à la fonction $f_{t,m}$ établie au point 2) ci-dessus par la base de données 74.

4) Construire l'agencement optimisé, c'est-à-dire une table de conversion telle que les tables des annexes 7 à 9, et l'associer au modèle de signature correspondant dans la base de données 74.

## Exemple 1 : Système de calcul en mémoire

Par exemple, d'autres calculateurs cibles potentiels comporte des systèmes de calcul en mémoire (« In-Memory Computing System » en anglais) tel que celui décrit dans l'article suivant : Maha Kooli et AL :"Smart instruction codes for in-memory computing architectures compatible with standard sram interfaces", 2018 Design, Automation & Test in Europe Conférence & Exhibition (DATE), pages 1634-1639. IEEE, 2018. Dans ce cas, l'agencement optimisé de la structure de données peut consister à enregistrer les données de cette structure de données dans ce système de calcul en mémoire plutôt que dans une autre mémoire telle qu'une autre mémoire cache.

La méthodologie décrite de façon générique ci-dessus est maintenant illustrée dans le cas particulier de l'architecture matérielle de ce calculateur cible qui comporte un système de calcul en mémoire.

Un système de calcul en mémoire est une mémoire qui est apte à réaliser certaines opérations entre les données qui y sont enregistrées. Par exemple, une telle mémoire est désignée par l'expression « C-SRAM ». Pour que la mémoire C-SRAM puisse exécuter une opération entre deux données, il faut que ces deux données soient alignées l'une par rapport à l'autre. Autrement dit, les bits de ces deux données doivent être alignés en colonnes. Si ce n'est pas le cas, avant de déclencher l'exécution de l'opération, au moins une des données doit être déplacée dans la mémoire de manière à l'aligner avec l'autre donnée. Une telle opération de déplacement d'une donnée prend du temps et ralentit donc l'exécution du code exécutable.

Dans le cas d'une telle architecture matérielle, il est intéressant d'enregistrer les données dans la mémoire C-SRAM si celles-ci sont correctement alignées les unes par rapport aux autres. En effet, dans ce cas, l'opération entre deux des données enregistrées dans cette mémoire peut être exécutée plus rapidement par la mémoire C-SRAM que si cette même opération était réalisée de façon conventionnelle par le microprocesseur. Par contre, si les données ne sont pas correctement alignées les unes par rapport aux autres, il vaut mieux que l'opération soit exécutée par le microprocesseur.

Pour adapter le compilateur 40 aux architectures matérielles comportant un système de calcul en mémoire, l'identifiant de cette architecture matérielle est associé, par la base de données 72, à une fonction de transformation $f_{t,2}$. La fonction $f_{t,2}$ est par exemple la suivante : $f_{t,2}(@_{v,i}) = f_c(@_{v,i}) - f_c(@_{v,i-1})$, où :

- $@_{v,i}$ et $@_{v,i-1}$ sont les adresses virtuelles des données de la structure de données accédées pour réaliser une opération "v" entre deux de ces données,
- $f_c(@_{v,i})$ est l'opération suivante : $f_c(@_{v,i}) = @_{v,i} \bmod L$, où :

   - L est la longueur, en nombre de bits, de chaque ligne de la mémoire C-SRAM,
   - « mod » désigne l'opération modulo, ainsi, le terme $@_{v,i} \bmod L$ est égal au reste de la division euclidienne de l'adresse $@_{v,i}$ par la longueur L.

L'opération "v" est une opération qui peut être exécutée par la mémoire C-SRAM. Ainsi, les adresses $@_{v,i}$ et $@_{v,i-1}$ sont les adresses virtuelles des opérandes de cette instruction "v".

Le terme $@_{v,i} \bmod L$ est représentatif de la distance qui sépare la donnée correspondant à cette adresse $@_{v,i}$ du début de la ligne de la mémoire C-SRAM. La différence entre les termes $f_c(@_{v,i})$ et $f_c(@_{v,i-1})$ est donc représentative de l'alignement d'une de ces données par rapport à l'autre. Par conséquent, le nombre de décalages à exécuter pour aligner ces deux données est proportionnel à cette différence.

Dans ce cas, la signature modèle est par exemple une distribution statistique normalisée qui associe, à la valeur zéro de l'identifiant de position relative, la quantité 1. Cette signature modèle est associée par la base de données 74 à un agencement optimisé qui comporte un jeu générique d'instructions qui, lorsqu'il est exécuté, enregistre les opérandes de l'instruction "v" dans la mémoire C-SRAM et provoque l'exécution de l'opération "v" par la mémoire C-SRAM.

Pour cela, par exemple, l'instruction "v" est codée dans la code source par une instruction spécifique en langage V0. Cette instruction spécifique permet de générer, lors de l'étape 106, un code exécutable 76 :

- qui provoque l'exécution de l'opération "v" par le microprocesseur 76,
- qui relève les adresses virtuelles $@_{v,i}$ et $@_{v,i-1}$ à chaque fois que cette instruction "v" est exécutée, et
- qui associe les adresses virtuelles $@_{v,i}$ et $@_{v,i-1}$ relevées à l'identifiant de la structure de données accédée pour former le motif d'accès relevé.

Ensuite, lors de l'opération 148, l'instruction spécifique qui alloue un espace mémoire pour y enregistrer la structure de données est remplacées par le jeu d'instructions optimisé. Dans ce cas, le jeu d'instructions optimisé lorsqu'il est exécuté par le calculateur cible :

- enregistre la structure de données dans la mémoire C-SRAM, et
- provoque l'exécution de l'opération "v" par la mémoire C-SRAM.

Dès lors, si l'identifiant de l'architecture matérielle acquis par le compilateur 40 lors de l'étape 118 correspond à une architecture matérielle comportant une mémoire C-SRAM avec des lignes de longueur L, alors le compilateur 40 est capable de générer un code exécutable 78 spécialement optimisé pour cette architecture matérielle.

Exemple 2: Mémoire secondaire

D'autres calculateurs cibles potentiels comportent ce qui est appelé ici une "mémoire secondaire". Une mémoire secondaire est une mémoire physiquement distincte de la mémoire principale. De plus cette mémoire secondaire correspond, dans l'espace d'adressage du programme d'ordinateur, à une plage d'adresses distincte de la plage d'adresses correspondant à la mémoire principale. Ainsi, la mémoire secondaire est utilisée lors de l'exécution du programme d'ordinateur uniquement si le code exécutable de ce programme d'ordinateur comporte :

- des instructions qui gèrent le transfert de données entre la mémoire principale et la mémoire secondaire, et
- des instructions d'accès à la mémoire secondaire.

Les instructions d'accès à la mémoire secondaire comporte, en tant qu'opérande, une adresse virtuelle comprise dans la plage d'adresses de l'espace d'adressage du programme d'ordinateur qui correspond spécifiquement à la mémoire secondaire. En cela, une mémoire secondaire est différentes des mémoires caches et autres mémoires similaires gérées automatiquement par le système d'exploitation et/ou un micro-calculateur spécifiquement dédié à cette fonction. En effet, pour bénéficier de la présence de telles mémoires caches, le programme d'ordinateur exécuté n'a pas besoin de comporter des instructions qui gèrent le transfert de données entre la mémoire principale et les mémoires caches et de comporter des instructions d'accès aux mémoires caches. De plus, contrairement à une mémoire secondaire, une mémoire cache ne correspond pas à une plage d'adresses, dans l'espace d'adressage du programme d'ordinateur, différente de la plage d'adresses de la mémoire principale.

Ainsi, pour utiliser une mémoire secondaire, le développeur doit introduire manuellement dans le code source du programme d'ordinateur :

- des instructions de transfert de données entre la mémoire principale et la mémoire secondaire, et
- des instructions d'accès à la mémoire secondaire.

Un exemple d'une telle mémoire secondaire est une mémoire connue sous l'acronyme SPM ("ScratchPad Memory"). Les accès à une telle mémoire secondaire sont plus rapide que les accès à la mémoire principale et à la mémoire cache.

Dans le cas d'un calculateur cible comportant une mémoire secondaire, l'agencement optimisé de la structure de données consiste à enregistrer au moins une partie des données de cette structure de données dans cette mémoire secondaire plutôt que dans une autre mémoire du calculateur cible.

Pour adapter le compilateur 40 aux architectures matérielles comportant une mémoire secondaire, l'identifiant de cette architecture matérielle est associé, par la base de données 72, à une fonction de transformation $f_{t,3}$. Ici, la fonction $f_{t,3}$ calcule pour chaque donnée $D_{S,n}$ de la structure de données S, une valeur $f_{t,3}(D_{S,n})$ représentative de l'intérêt d'enregistrer cette donnée $D_{S,n}$ dans la mémoire secondaire.

Plus la valeur $f_{t,3}(D_{S,n})$ est grande, plus le gain de vitesse d'exécution du programme d'ordinateur attendu en plaçant la donnée $D_{S,n}$ dans la mémoire secondaire est important. Pour cela, dans ce mode de réalisation, la valeur $f_{t,3}(D_{S,n})$ croît en fonction d'une grandeur $Av(D_{S,n})$ et décroît en fonction d'une grandeur $Occ(D_{S,n})$. Les grandeurs $Av(D_{S,n})$ et $Occ(D_{S,n})$ sont décrites plus en détail ci-dessous. Elles sont calculées à partir du motif d'accès relevé pour la structure de données S.

Pour cela, ici, le module 70 commence par combiner les deux motifs d'accès relevés pour chaque indice de la structure de données S pour ne former qu'un seul motif d'accès complet comportant, pour chaque donnée accédée, son identifiant de position complet. Par exemple, dans le cas de la matrice "a", le module 70 combine les motifs d'accès $MA_{xa}$ et $MA_{ya}$, pour obtenir le motif d'accès complet $\{(x_{a,1}, y_{a,1}) ; (x_{a,2}, y_{a,2}); ... ;(x_{a,t-1}, y_{a,t-1}); (x_{a,t}, y_{a,t});... ; (x_{a,max}, y_{a,max})\}$, où $(Xa,t, y_{a,t})$ est l'identifiant de la position de la donnée de la matrice "a" accédée à l'instant t.

Ensuite, pour calculer la grandeur $Occ(D_{S,n})$, le module 70 compte le nombre de fois où l'identifiant de position, correspondant à la donnée $D_{S,n}$, apparaît dans le motif d'accès complet relevé. Ce nombre est égal à la valeur de la grandeur $Occ(D_{S,n})$, c'est-à-dire au nombre de fois où la donnée $D_{S,n}$ a été accédée lors de l'exécution du code 76.

Le module 70 compte aussi dans le motif d'accès complet relevé, entre chaque paire "id" d'identifiants de position consécutifs de la donnée $D_{S,n}$, le nombre $Na_{id}$ d'identifiants de position différents de celui correspondant à la donnée $D_{S,n}$. Ce nombre $Na_{id}$ est donc égal au nombre de données, autre que la donnée $D_{S,n}$, accédées entre deux accès consécutifs à la donnée $D_{S,n}$. Le cumul de ces nombres $Na_{id}$ divisé par le nombre d'intervalles entre les identifiants de la position de la donnée $D_{S,n}$ donne la valeur de la grandeur physique $Av(D_{S,n})$. Ce nombre d'intervalles entre deux données $D_{S,n}$ accédées consécutivement, est égal à $OCC(D_{S,n})$ - 1.

Ici, la valeur $f_{t,3}(D_{S,n})$ est définie par la relation suivante : $f_{t,3}(D_{S,n})$ = $Av(D_{S,n})/Occ(D_{S,n})$. Lorsque la grandeur $Occ(D_{S,n})$ est nulle ou égale à un, la valeur $f_{t,3}(D_{S,n})$ est égale à zéro.

De préférence, pour accélérer le calcul de la valeur $f_{t,3}(D_{S,n})$, celle-ci est calculée à l'aide de la relation suivante :

$$C(D_i) = \frac{1}{\sum_{j=0}^{N-1} s_i(j)} \times \frac{\sum_{j=0}^{Occ(i)} \sum_{k=0}^{N-1} Dirac\left(\sum_{l=0}^{N-1} s_i(l) - j\right)}{\sum_{j=0}^{N-1} s_i(j) - 1}$$

où :

- $D_i$ est la donnée située à l'adresse $@_i$ dans la structure de données S,
- $C(D_i)$ est égale à la valeur $f_{t,3}(D_i)$,
- le symbole "x" désigne l'opération de multiplication,
- $Occ(i)$ est le nombre d'accès à l'adresse $@_i$ et donc à la donnée $D_i$,
- N est le nombre total d'accès à la structure de données S,
- $s_i()$ est une fonction de similitude tel que $s_i(j) = 1$, si le i-ième adresse accédée est la même que la j-ième adresse accédée dans le motif d'accès relevé,
- $Dirac()$ est la fonction de Dirac discrète.

Plus précisément, la fonction de similitude $s_i()$ est définie par la relation suivante :

$$\forall i \in [0, N-1], s_i : \begin{pmatrix} [[0, N-1]] \to \{0,1\} \\ j \to \begin{pmatrix} 1 \text{ if } @_i = @_j \\ 0 \text{ otherwise} \end{pmatrix} \end{pmatrix}$$

où :

- $@_i$ et $@_j$ sont, respectivement, la i-ième adresse et la j-ième adresse accédées,
- le terme "if" correspond au terme "si" en français,
- le terme "otherwise" correspond au terme "sinon" en français.

La fonction DiracQ est définie par la relation suivante :

$$\left\{ \begin{array}{l} \mathbb{Z} \rightarrow \{0,1\} \\ j \rightarrow \left[ \begin{array}{l} 1 \text{ if } j=0 \\ 0 \text{ ohterwise} \end{array} \right] \end{array} \right\}$$

où les termes "if" et "otherwise" ont le même sens que dans la relation précédente.

Selon un premier mode de réalisation, la distribution statistique construite à partir du motif d'accès transformé contient des classes pour chaque valeur ou plage de valeurs possibles pour les différentes valeurs $f_{t,3}(D_i)$ contenues dans le motif d'accès transformée. Cette distribution statistique forme la signature caractéristique des accès à la structure de données S.

Selon un second mode de réalisation préféré, la distribution statistique associe à chaque adresse $@_i$ d'une donnée $D_i$ de la structure de donnée, la valeur $f_{t,3}(D_i)$. En effet, la valeur $f_{t,3}(D_i)$ est déjà fonction du nombre d'occurrences de la donnée $D_i$ dans le modif d'accès relevé.

Lorsque la fonction $f_{t,3}$ est utilisée, le motif d'accès transformé contient non pas des identifants de position relative mais des valeurs représentatives de l'intérêt d'enregistrer une donnée particulière dans la mémoire secondaire. Dans ce cas, la signature modèle est associée par la base de données 74 à un agencement optimisé qui comporte un jeu générique d'instructions qui, lorsqu'il est exécuté, enregistre dans la mémoire secondaire certaines données de la structure de données associées aux valeurs $f_{t,3}(D_i)$ les plus élevées.

Autres exemples :

Le compilateur 40 peut aussi être adapté à des architectures matérielles multiprocesseurs dans lequel la structure de données peut aussi bien être enregistrée dans une mémoire locale d'un microprocesseur que dans une mémoire commune à plusieurs microprocesseurs. Dans ce cas, un agencement optimisé connu consiste à enregistrer la structure de données dans la mémoire commune lorsque différents processeurs doivent accéder concomitamment à cette structure de données et, dans le cas contraire, à enregistrer cette structure de données dans la mémoire locale d'un des microprocesseurs.

Chapitre III : Autres applications du module 70 de construction d'une signature caractéristique.

La signature caractéristique construite par le module 70 est plus reproductible que les signatures caractéristiques connues. Notamment, elle ne varie pas en fonction de la quantité de données accédées. Elle ne varie pas non plus en fonction d'une modification de la plage d'adresses virtuelles dans laquelle la structure de données est enregistrée. Ces avantages peuvent être mis à profit dans d'autres applications que l'optimisation de code exécutable.

Par exemple, à titre d'illustration, il est proposé ici un procédé de détection d'une altération d'un code exécutable. De telles altérations qualifiées de « malicieuses » sont par exemple introduites par des programmes malveillants connus sous le nom de "malware" ou de "virus". Ainsi ce procédé permet de détecter l'existence de tels programmes malveillants.

Dans cet exemple, l'unité de calcul qui exécute le code exécutable est par exemple identique à l'unité de calcul 2 sauf que :

- le code exécutable 12 est remplacé par le code exécutable d'un programme d'ordinateur spécifique, et
- la mémoire 8 comporte en plus des instructions pour mettre en œuvre ce procédé de détection d'une altération du code exécutable 12.

Ainsi, en particulier, la mémoire 8 comporte les instructions du module 70 de construction d'une signature caractéristique.

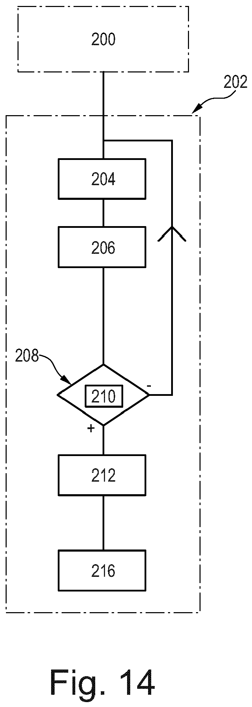

Le procédé de détection d'une altération du code exécutable est maintenant décrit en référence au procédé de la figure 14.

Le procédé débute par une phase 200 d'initialisation. Lors de cette phase 200, le code exécutable original du programme d'ordinateur spécifique est fourni. Le code exécutable original est une version du code exécutable dont on est sûr qu'il est dépourvu d'altération malicieuse. Dans cet exemple de réalisation, ce code exécutable original incorpore les instructions du module 68 de relevé de motifs d'accès pour chaque structure de données pour laquelle une signature caractéristique doit être construite.

Une base de données BdRef à partir de laquelle peuvent être extraits, pour chaque structure de données, des signatures modèles des accès à cette structure de données est également fournie. Ici, la signature modèle des accès à une structure de données est une signature attendue et prévisible des accès à cette structure de données correspondant à ce qui peut être observé lorsque le code exécutable original est exécuté.

Cette base de données BdRef est typiquement établie en exécutant le code exécutable original. Lors de cette exécution, le module 68 relève pour chaque structure de données :

- l'identifiant de la structure de données,
- la taille de cette structure de données,
- un instant $t_{ref}$ auquel débute l'accès à cette structure de données, et
- les motifs d'accès à cette structure de données.

Par exemple, l'instant $t_{ref}$ est un nombre de cycles d'horloge du microprocesseur compté depuis le début de l'exécution du code exécutable.

Ensuite, pour chaque structure de données, le module 70 construit la signature caractéristique des accès à cette structure de données. Dans le contexte de la détection d'une altération du code exécutable, les choix possibles pour la fonction de transformation $f_{t,m}$ sont généralement plus nombreux. En effet, il suffit que la fonction $f_{t,m}$ choisie permette de construire une signature qui varie en fonction du parcours, par le microprocesseur, des données de cette structure de données. A titre d'illustration, ici, la fonction $f_{t,m}$ est choisie égale à la fonction $f_{t,1}$.

Dans un mode de réalisation possible, chaque signature caractéristique construite est alors comparée à des signatures modèles extraites de la base de données 74. Ici, la base de données 74 est, par exemple, identique à celle décrite dans le chapitre I. Ceci est par exemple réalisé en mettant en œuvre les opérations 142 et 144 du procédé de la figure 9.

Ensuite, l'association entre l'identifiant de la structure de données et le modèle de signature qui permet de générer la signature modèle qui est le plus fortement corrélé à la signature construite est enregistrée dans la base de données BdRef. La valeur $V_{cor-ini}$ du coefficient de corrélation entre la signature construite et cette signature modèle est enregistrée dans la base de données BdRef associée à l'identifiant de cette structure de données. De même l'instant $t_{ref}$ relevé est enregistré dans la base de données BdRef associé à l'identifiant de cette structure de données.

La base de données BdRef peut-être établie en exécutant le code exécutable original sur n'importe quelle unité de calcul équipée du module 70 de construction d'une signature caractéristique et de la base de données 74.

Une fois la phase 200 terminée, une phase 202 d'exploitation du code exécutable débute. Lors de cette phase d'exploitation, le code exécutable est exécuté. A chaque fois que le code exécutable est exécuté, les étapes suivantes sont réalisées.

Lors d'une étape 204, le module 68 relève, pour chaque structure de données accédées :

- l'identifiant de cette structure de données,
- la taille de cette structure de données,
- un instant tt auquel débute l'accès à cette structure de données, et
- un ou plusieurs motifs d'accès.

Ensuite, lors d'une étape 206, le module 70 construit pour chaque structure de données, une signature caractéristique. Cette étape 206 est par exemple identique à l'étape 120 précédemment décrite.

Lors d'une étape 208, le microprocesseur compare la signature caractéristique construite pour cette structure de données à la signature modèle extraite à partir du modèle de signatures associé au même identifiant de structure de données par la base de données BdRef. Lors de l'étape 208, le microprocesseur calcule une coefficient de corrélation $V_{cor,t}$ entre la signature caractéristique construite et la signature modèle extraite. Par exemple, ce coefficient de corrélation $V_{cor,t}$ est calculé comme précédemment décrit dans le cas l'opération 144.

Ensuite, lors d'une opération 210, le microprocesseur compare la valeur $V_{cor,t}$ à la valeur $V_{cor-ini}$ associée, par la base de données BdRef, au même identifiant de structure de données.

Si l'écart entre les valeurs $V_{cor,t}$ et $V_{cor-ini}$ dépasse un seuil prédéterminé, lors d'une étape 212, le microprocesseur déclenche le signalement d'une altération malicieuse du code exécutable. En effet, une altération du code exécutable se traduit souvent par une modification des motifs d'accès à une ou plusieurs structures de données.

De plus, ici, pour chaque structure de données, l'opération 210 comporte en plus la comparaison de l'instant $t_t$ relevé à l'instant $t_{ref}$ extrait de la base de données BdRef. Si l'écart entre ces deux instants dépasse un seuil prédéterminé, le procédé se poursuit par l'étape 212. Ainsi, dans ce mode de réalisation, le procédé est aussi capable de détecter une altération du flot d'exécution du code exécutable.

Dans le cas contraire, le déclenchement du signalement d'une altération malicieuse est inhibé. L'étape 208 est exécutée pour chaque structure de données pour lesquelles le module 68 a relevé son identifiant, sa taille et un motif d'accès.

Lors d'une étape 216, en réponse au signalement d'une altération malicieuse du code exécutable, le microprocesseur exécute une contre-mesure. Il existe un grand nombre de contre-mesures différentes possibles qui peuvent être mises en œuvre. Par exemple, la contre-mesure exécutée est choisie dans le groupe constitué :

- de l'affichage d'un message indiquant qu'une altération malicieuse du code exécutable a été détectée,
- l'interruption de l'exécution du code exécutable, et
- l'effacement et la destruction du code exécutable.

Le microprocesseur peut également exécuter une combinaison de plusieurs des contre-mesures du groupe ci-dessus.

Chapitre IV : Variantes

Chapitre IV.1 : Variantes communes

Ce qui a été décrit dans le cas particulier où la structure de données est une matrice à deux dimensions s'applique, après adaptation, à tout type de structure de données. Dans le cas où la structure de données n'est pas une matrice à deux dimensions, les instructions spécifiques « MATRIX_DEFINE », « MATRIX_ALLOCATE », « MATRIX_GET », « MATRIX_SET », « MATRIX_FREE » du langage V0 sont remplacées, respectivement, par des instructions spécifiques « D_DEFINE », « D_ALLOCATE », « D_GET », « D_SET », « D_FREE ». Ces instructions spécifiques commençant par «D_» remplissent chacune la même fonction que celle décrite dans le cas particulier où la structure de données est une matrice à deux dimensions. Toutefois, le jeu d'instructions correspondant en langage C++ doit être adapté. Par exemple, si la structure de données est une matrice à une dimension, le jeu d'instructions correspondant en langage C++ à l'instruction spécifique « D_DEFINE n» et « int *n ». De même, si la structure de données est une matrice à trois dimensions, le jeu d'instructions correspondant en langage C++ à l'instruction spécifique « D_DEFINE » et l'instruction « int ***n ».
Le jeu d'instructions d'instrumentation doit aussi être adapté. Par exemple, dans le cas où la structure de données est une matrice à une ou à plus de trois dimensions, le nombre d'indices à relever lors de chaque accès à une donnée de cette structure de données n'est pas le même.
D'autres modes de réalisation du langage V0 sont possibles. Par exemple, au lieu d'utiliser le langage de programmation C++ pour les autres instructions que les instructions spécifiques, d'autres langages de programmation peuvent être utilisés comme le langage C, Ada, Caml ou PASCAL pour ces autres instructions.

Chapitre IV.2 - Variantes de la construction de la signature caractéristique

La fonction de transformation $f_{t,m}$ peut être exécutée immédiatement à chaque fois qu'un identifiant de position est relevé et seul le résultat de la fonction de transformation est enregistré directement dans le motif d'accès transformé. Cette variante permet ainsi d'éviter d'enregistrer en mémoire le motif d'accès relevé complet. Par exemple, dans le cas où la fonction $f_{t,m}$ est la fonction $f_{t,1}$, il suffit d'enregistrer en mémoire juste le précédent identifiant de position relevé, c'est-à-dire les indices $x_{t-1}$ et $y_{t-1}$.
En variante, le code source original n'est pas écrit dans le langage V0, mais, par exemple, dans un langage conventionnel de programmation comme le langage C++ ou le langage C. Dans ce cas, selon un premier mode de réalisation, le module 64 de compilation est modifié pour exécuter, avant l'opération 108, une opération de spécialisation du code source original fourni. Lors de cette opération de spécialisation, le module 64 de compilation analyse le code source et y introduit automatiquement les instructions spécifiques nécessaires pour la mise en œuvre des procédés décrits ici. Par exemple, à cet effet, le module 64 de compilation remplace automatiquement les instructions du langage C++ qui traitent des structures de données par les instructions spécifiques correspondantes du langage V0. En particulier, le module de compilation remplace automatiquement les portions du code source original écrit en langage C++ qui accèdent aux structures de données par les instructions spécifiques correspondantes du langage V0. Ensuite, le reste du procédé de construction de la signature caractéristique est identique à ce qui a été décrit précédemment. Selon un second mode de réalisation, le module 64 est modifié pour transformer directement le code source original écrit dans un langage conventionnel en un code source intermédiaire instrumenté. Par exemple, pour cela, le module 64 de compilation analyse le code source original pour identifier les portions de ce code source original qui traitent des structures de données. Ensuite, chaque portion identifiée est automatiquement complétée par le jeu d'instructions d'instrumentation nécessaire pour relever le motif d'accès à ces structures de données. Dans ce second mode de réalisation, le langage V0 n'est donc pas utilisé.
Dans une autre variante, le module 68 de relevé des accès est implémenté sous la forme d'un module matériel implémenté, par exemple, dans le microprocesseur 56. Dans ce cas aussi, le code exécutable n'a pas besoin d'être instrumenté pour relever les motifs d'accès. Le module matériel de relevé des accès fonctionne comme dans le cas de l'implémentation logicielle précédemment décrite. De plus, de préférence, dans ce cas, chaque donnée enregistrée dans la mémoire 58 comporte, en plus de la donnée elle-même, l'identifiant de la structure de données à laquelle cette donnée appartient. Ainsi, le module matériel peut facilement relever l'identifiant de la structure de données correspondant à la donnée accédée. Cette variante est particulièrement avantageuse dans le cas du procédé de détection d'une altération du code exécutable d'un programme. En effet, dans ce cas, le code exécutable du programme peut être un code exécutable généré de façon conventionnelle et donc dépourvu d'instruction pour relever les motifs d'accès. Par exemple, le code exécutable est généré en compilant un code source en langage C++ ou autre avec un compilateur conventionnel comme GDB. Un tel compilateur est accessible en ligne à l'adresse suivante : http://www.onlinegdb.com/. De tels compilateurs génèrent un code exécutable qui, lorsqu'il est exécuté par un microprocesseur, enregistre chaque donnée dans la mémoire avec un identifiant de la structure de données à laquelle appartient cette donnée.

En variante, le module 68 de relevé est implémenté de manière à relever le motif d'accès uniquement pour quelques-unes des structures de données déclarées dans le code source. Par exemple, pour cela, seule une ou plusieurs des structures de données du code source sont accédées en utilisant les instructions spécifiques du langage V0. Dans ce code source, les accès aux autres structures de données déclarées pour lesquels aucun motif d'accès ne doit être relevé sont codés en utilisant directement les instructions correspondantes du langage C++ au lieu d'utiliser les instructions spécifiques du langage V0.

En variante, le module 68 de relevé est modifié pour relever soit uniquement un motif d'accès en lecture, soit uniquement un motif d'accès en écriture. Un motif d'accès en lecture est un motif d'accès qui comporte uniquement les identifiants de position des données de la structure de données lues pendant l'exécution du code exécutable 76. À l'inverse, un motif d'accès en écriture est un motif d'accès qui comporte uniquement les identifiants de position des données de la structure de données écrites pendant l'exécution du code exécutable 76. Par exemple, pour relever uniquement le motif d'accès en lecture, aucune instruction spécifique n'est utilisé dans le code source pour coder les accès en écriture à la structure de données. Par exemple, les instructions "MATRIX_SET" et "MATRIX_ADD" sont remplacées par des instructions correspondantes conventionnelles du langage C++ dans le code source 62.

Lors de la même exécution du code exécutable 76, le module 68 peut aussi relever pour la même structure de données un motif d'accès en lecture et un motif d'accès en écriture. Par exemple, les instructions spécifiques d'écriture sont modifiées pour enregistrer les identifiants de position relevés dans un motif d'accès spécifique à l'écriture tandis que les instructions spécifiques de lecture sont modifiées pour enregistrer les identifiants de position relevés dans un motif d'accès différents et spécifiques à la lecture. Ensuite, ces motifs d'accès en lecture et/ou en écriture sont utilisés comme décrits précédemment pour obtenir la signature caractéristique des accès à cette structure de données. Dans ce cas, par exemple, la signature caractéristique peut comporter une distribution statistique construite à partir des motifs d'accès en lecture et une autre distribution statistique construite à partir des motifs d'accès en écriture.

Dans le cas où la taille des structures de données n'est pas nécessaire pour générer une signature modèle, le module 68 peut être simplifié pour ne pas relever cette taille.

En variante, l'identifiant de position relevé est l'adresse virtuelle de la donnée accédée. Dans ce cas, la fonction $f_{t,m}$ est adaptée en conséquence. Par exemple, la fonction $f_{t,1}$ est appliquée à l'adresse virtuelle relevée et non plus à chacun des indices $x_t$ et $y_t$. Dans d'autres modes de réalisation possibles, l'identifiant de position n'est ni un indice ni l'adresse virtuelle de la donnée accédée. Par exemple, l'identifiant de position relevé est l'adresse physique de la donnée dans la mémoire principale. Ce sera le cas, par exemple, lorsque aucun mécanisme de mémoire virtuelle n'est mis en œuvre.

Dans une variante simplifiée, l'étape 126 de transformation du motif d'accès relevé en motif d'accès transformé est omise. Dans ce cas, la distribution statistique est par exemple directement construite à partir du motif d'accès relevé. Cette variante est préférentiellement combinée avec le cas où l'identifiant de position relevé est un indice utilisé pour repérer la position de la donnée accédée à l'intérieur de la structure de données.

Dans un autre mode de réalisation simplifié, la distribution statistique construite n'est pas normalisée.

Chapitre IV.3 : Variantes du compilateur

Lorsque l'architecture matérielle du compilateur et du calculateur cible sont identiques et qu'aucun agencement optimisé pour aucune des structures de données déclarées dans le code n'a pu être identifié, alors la génération du code exécutable 78 peut être omise. En effet, dans ce cas particulier, le code exécutable 78 est identique au code exécutable 76, de sorte qu'il n'est pas nécessaire de le générer une nouvelle fois.

Si le compilateur 40 est uniquement conçu pour générer du code exécutable pour un calculateur cible particulier, la base de données 72 peut-être omise et remplacée simplement par la fonction $f_{t,m}$ à mettre en œuvre à chaque fois. Dans ce cas, l'étape d'acquisition d'un identifiant de l'architecture matérielle peut aussi être omises.

En variante, la base de données 72 associe plusieurs fonctions $f_{t,m}$ au même identifiant d'architecture matérielle. Dans ce cas, à partir du même motif d'accès relevé, le module 70 construit plusieurs signatures différentes en utilisant chacune des fonctions $f_{t,m}$ associées à cet identifiant d'architecture. Ces différentes signatures sont alors comparées aux signatures modèles. Si une seule des signatures construites correspond à une signature modèle, alors l'agencement optimisé associé à cette signature modèle est automatiquement sélectionné. Si plusieurs signatures construites correspondent à des signatures modèles de la base de données 74, alors un seul des agencements optimisés associés à ces différentes signatures modèles est mis en œuvre. Par exemple, dans ce cas, les agencements optimisés sont chacun associés à un indice de priorité et c'est l'agencement optimisé associé à l'indice de priorité le plus élevé qui est mis en œuvre.

Au lieu de contenir des modèles paramétrés de signatures, la base de données 74 peut directement contenir les signatures modèles. Dans ce cas, typiquement, pour un même parcours particulier, la base de données comporte autant de signatures modèles que de tailles possibles pour la structure de données. Cela augmente la taille de la base de données 74 mais, en contrepartie, cela simplifie l'extraction d'une signature modèle à partir de cette base de données. En effet, il n'est alors plus nécessaire de générer cette signature modèle à partir d'un modèle paramétré de signatures. Dans ce cas, il n'est pas non plus nécessaire que le module 68 relève la taille de la structure de données.

Dans le cas de structures de données autres que des matrices à deux dimensions, des modèles de signature doivent être établis pour chacune de ces structures de données. Pour cela, la même méthodologie que celle décrite dans le cas des matrices à deux dimensions peut être utilisée.

La description précédente a été donnée dans le cas particulier où l'agencement standard des matrices mis en œuvre par le module 64 de compilation est l'agencement en ligne. En variante, l'agencement standard peut-être différent. Par exemple, l'agencement standard peut être considéré comme étant l'agencement en colonne ou en diagonale ou autre.

La performance prédéfinie à améliorer du calculateur cible peut être différente de la vitesse d'exécution du programme d'ordinateur par ce calculateur cible. Par exemple, la performance prédéfinie est choisie dans le groupe constitué :

- de la vitesse d'exécution du code exécutable par le calculateur cible,
- de l'énergie consommée par le calculateur cible,
- du bruit généré par le calculateur cible lorsqu'il exécute le code exécutable,
- de la température du calculateur cible,
- du temps moyen entre pannes (« meantime between failures » en anglais).

Dans ce cas, chacun des agencements optimisés enregistrés dans la base 74 sont optimisés pour améliorer la performance prédéfinie choisie dans le groupe ci-dessus.

Dans un mode de réalisation plus perfectionné, dans le cas où la performance à améliorer du calculateur cible n'est pas toujours la même, la base de données 74 comporte, associée à chaque modèle de signature, un identifiant de la performance à améliorer et un agencement optimisé pour améliorer cette performance. Ensuite, le module 70 acquiert l'identifiant de la performance du calculateur cible à améliorer. Puis, lors de l'opération 144, seules les modèles de signature associés au même identifiant de performance que celui acquis sont utilisés. Ainsi, lors de l'opération 146, seuls les agencements optimisés pour améliorer cette performance sont sélectionnés.

Dans une variante simplifiée où l'architecture matérielle du calculateur cible est toujours la même, l'opération 118 d'acquisition d'un identifiant de l'architecture matérielle peut être omise. De plus, la base de données 72 est simplifiée puisqu'elle peut alors comporter uniquement la seule fonction de transformation associée à ce calculateur cible.

Dans des modes de réalisation moins perfectionnés, la comparaison réalisée lors de l'opération 144 est réalisée différemment. Par exemple, d'autres coefficients de corrélation peuvent être utilisés. Par exemple, les coefficients de corrélation connus sous les termes anglais « Kendall Tau Rank » ou « Spearman's Rank » peuvent être utilisés.

En variante, lors de la sélection de l'agencement optimisé pour une structure de données, le module 66 de compilation présente au développeur une liste restreinte d'agencements optimisés. Cette liste restreinte comporte seulement les agencements optimisés qui sont associés, par la base de données 74, aux modèles de signature utilisés pour générer les signatures modèles les plus fortement corrélés à la signature construite pour cette structure de données. Par exemple, la liste restreinte comporte seulement les agencements optimisés associés aux signatures modèles pour lesquelles le coefficient de corrélation calculé dépasse un seuil prédéterminé. Ensuite, le développeur sélectionne dans cette liste restreinte, l'agencement optimisé à utiliser pour cette structure de données. Ici, par « liste restreinte d'agencements optimisés », on désigne une liste qui contient un nombre d'agencements optimisés susceptibles d'être utilisés pour cette structure de données qui est inférieur au nombre total d'agencements optimisés contenus dans la base 74 et susceptibles d'être utilisés pour cette même structure de données.

Dans le cas où le code source original n'est pas écrit dans le langage V0, mais, par exemple, dans un langage conventionnel de programmation comme le langage C++ ou le langage C, le module 66 de compilation est modifié de façon similaire à ce qui a été décrit, dans le même cas, pour le module 64 de compilation. En particulier, le module 66 est modifié soit pour spécialiser le code source original en utilisant pour cela des instructions du langage V0 soit pour transformer directement le code source original en un code source optimisé. Par exemple, dans ce dernier cas, le module 66 de compilation analyse le code source original pour identifier les portions de ce code source original qui allouent de l'espace mémoire à une structure de données particulière. Ensuite, la portion identifiée est automatiquement remplacée par le jeu d'instructions optimisé sélectionné à partir de la signature des accès à cette structure de données particulière.

Chapitre IV. 4 : Variantes du procédé de détection d'altération du code exécutable

Dans un mode de réalisation simplifié, les signatures sont construites uniquement pour une partie des structures de données accédées par le microprocesseur lorsqu'il exécute le code exécutable. Dans ce cas, la base de données peut également être allégée en ne comportant que les informations nécessaires pour extraire des signatures modèles uniquement pour cette partie des structures de données. Dans une version très simplifiée, ladite partie limitée des structures de données comporte une seule structure de données.

Si la taille des structures de données accédées est toujours la même, la base de données BdRef contient directement la signature modèle associée à l'identifiant de cette structure de données. Dans ce cas, les modèles de signature ne sont pas mis en œuvre.

En variante, lors de la phase 200, pour chaque structure de données, un modèle spécifique de signature est construite puis enregistré dans la base de données BdRef. Le modèle spécifique de signature permet d'extraire une signature modèle qui présente un coefficient de corrélation supérieur à 0,8 ou à 0,9 avec la signature construite pour la même structure de données lors de la phase 202 en absence d'altération du code exécutable.

En variante, la comparaison de l'instant tt à l'instant $t_{ref}$ lors de l'opération 210 est omise. Dans ce cas, il n'est pas nécessaire d'enregistrer l'instant $t_{ref}$ dans la base de données BdRef.

Chapitre V : Avantages des modes de réalisation décrits

Chapitre V.I - Avantages de la signature construite

L'utilisation en tant que que signature caractéristique des accès à la mémoire, de l'ensemble des signatures caractéristiques des accès aux structures de données permet d'obtenir une signature caractéristique plus reproductible. En particulier, la signature caractéristique ainsi construite est plus reproductible qu'une signature caractéristique construite en prenant en compte tous les accès à la mémoire et sans séparer les accès à une structure de données des autres accès à la mémoire.

De plus, le fait que la signature soit construite à partir d'identifiants de position relative et non pas directement à partir des adresses virtuelles ou physique, permettent d'obtenir une signature qui dépend seulement de la façon dont les données de la structure de données sont parcourues lors de l'exécution du programme d'ordinateur. Ainsi, la signature construite est pratiquement indépendante des autres caractéristiques du programme d'ordinateur exécuté. Par exemple, les signatures construites, obtenues en exécutant deux programmes d'ordinateur différents, mais qui accèdent à la structure de données selon le même parcours particulier sont identiques.

L'utilisation d'identifiants de position relative rend également la signature construite insensible à la modification de la plage d'adresses virtuelles ou physique allouée à cette structure de données. En effet, il est fréquent que lors d'une exécution suivante du même programme d'ordinateur, le système d'exportation alloue une plage d'adresses virtuelles ou physiques différente à la même structure de données.

Grace au fait que la distribution statistique soit normalisée, il importe peu qu'un programme d'ordinateur réitère de nombreuses fois les mêmes traitements de la structure de données alors qu'un autre programmes ordinateurs n'exécute qu'une seule fois ces traitements. Si ces deux programmes parcourent de la même façon la structure de données, les signatures construites pour ces deux programmes seront identiques ou très similaires.

Le fait que l'identifiant de position relative soit égal à la distance entre deux identifiants de position relevés successivement permet d'obtenir un motif d'accès transformé représentatif de l'ordre dans lequel les différentes données de la structure de données sont accédées.

Le fait que la signature construite comporte une distribution statistique pour chaque indice permet d'obtenir une signature plus distinctive que si les adresses virtuelles étaient utilisées.

La construction de la signature caractéristique des accès à la mémoire en utilisant pour cela non pas des adresses physiques, mais les indices ou les adresses virtuelles des données accédées permet d'obtenir une signature indépendante :

- du système d'exploitation exécuté par le calculateur qui exécute le programme d'ordinateur, et
- de l'agencement de la structure de données dans la mémoire du calculateur.

L'utilisation de la fonction de transformation $f_{t,3}$ permet de construire une signature caractéristique particulièrement bien adaptée au cas des architecture matériel comportant une mémoire secondaire. En particulier, cette signature caractéristique permet en plus d'identifier les données de la structure de données qu'il est préférable d'enregistrer dans la mémoire secondaire.

Chapitre V.2 : Avantages du compilateur

Le procédé de compilation décrit permet de générer un code exécutable optimisé qui est fonctionnellement identique à celui généré par les compilateurs conventionnels, mais qui améliore les performances du calculateur cible qui l'exécute. En particulier, l'amélioration des performances est obtenues sans modifier l'algorithme du programme d'ordinateur écrit par le développeur.

L'utilisation du coefficient de corrélation défini par la relation (1) permet de rendre le procédé de compilation robuste vis-à-vis d'un taux important d'accès aléatoires à une structure de données.

Le fait que l'agencement optimisé soit un agencement dans lequel les données de la structure de données sont enregistrées dans la mémoire selon un ordre proche de l'ordre temporelle dans lequel elles sont accédées lors de l'exécution du programme d'ordinateur, augmente substantiellement la vitesse d'exécution du code exécutable sur un calculateur cible comportant une mémoire cache.

Le fait que la base de données 74 comporte au moins les agencements optimisés des annexes 7 et 8 permet d'obtenir une amélioration de la vitesse d'exécution pour la plupart des codes sources qui contiennent des traitements de matrices.

L'enregistrement de modèles de signature paramétrés dans la base de données 74 permet de réduire la taille de cette base de données.

Chapitre V.3 - Avantages de la détection d'altération du code exécutable

La signature caractéristique utilisée pour détecter une altération du code exécutable est très peu sensible au contexte dans lequel le programme d'ordinateur est exécuté. Par exemple, la signature construite est indépendante de l'architecture matérielle du calculateur sur lequel s'exécute le programme d'ordinateur. Elle est aussi indépendante des accès à la mémoire autre que ceux mis en œuvre pour accéder à cette structure de données. Grâce à cette insensibilité au contexte d'exécution, la signature construite pendant l'exécution du programme d'ordinateur est très reproductible. Dès lors, le fait que la signature construite soit différente de la signature modèle est un marqueur fiable d'une altération du code exécutable. Par conséquent, grâce à cette utilisation de cette signature construite, il n'est pas nécessaire comme dans l'article de Zhixing Xu précédemment cité, d'utiliser un mécanisme compliqué pour déterminer si la signature construite est ou non causée par une altération malicieuse du code exécutable.

De préférence, les étapes du procédé de détection d'une altération du code exécutable sont mises en œuvre pour au moins 25 % ou au moins 50 % des structures de données accédées par le microprocesseur lorsqu'il exécute ce code exécutable. Le fait que des signatures soient construites pour plusieurs structures de données du code exécutable renforce la fiabilité du procédé de détection.

Le fait de comparer les instants $t_t$ et $t_{ref}$ permet en plus de détecter une modification de flot d'exécution du programme d'ordinateur lorsqu'il est exécuté par un microprocesseur.

**ANNEXES**

**Annexe 1 : Exemple de code source en langage V0**

```
#define N0 10
#define N1 10
#define N2 10
#define TYPE i n t


voidmatrixMult ( )
{
MATRIX_DEFINE(TYPE, a) ;
MATRIX_DEFINE(TYPE, b) ;
MATRIX_DEFINE(TYPE, res) ;

MATRIX_ALLOCATE(TYPE, N0, N1, a) ;



MATRIX_ALLOCATE(TYPE, N2 , N0, b) ;
```

```
MATRIX_ALLOCATE(TYPE, N2 , N1, r e s) ;




for (int j =0; j<N1 ; j++)
{
for (int i =0; i<N2 ; i++)
{
MATRIX_SET( res, i , j , 0) ;
for(intk=0;k<N0;k++)
{
int tmp_a = MATRIX_GET(a , k , j) ;
int tmp_b = MATRIX_GET(b , i , k);
MATRIX_ADD(r e s , i , j , tmp_a*tmp_b);
}
}
}

MATRIX_FREE(a , N0 , N1, TYPE) ;


MATRIX_FREE(b , N2 , N0, TYPE) ;


MATRIX_FREE(res, N2 , N1, TYPE);
}
```

**Annexe 2 : Exemple de code source intermédiaire optimisé en langage C++**

```
#define N0 10
#define N1 10
#define N2 10
#define TYPE int


void matrixMult( )
{
int**a;
int**b ;
int**res;

a = (int**) malloc (N1 * size of (int*)) ;
for (inti =0; i <(int)N1 ; i++)
a [i]= (int*) malloc(N0*size of(int)) ;

b = (int**) malloc (N2 * size of (int*)) ;
for (inti =0; i<(int)N2 ; i++)
b[i] = (int*) malloc(N0*size of (int)) ;

res = (int**) malloc (N1 * size of (int*)) ;
for (int i =0; i <(int)N1 ; i++)
res [i] = (int*) malloc (N2*size of (int)) ;

for (int j =0; j<N1 ; j++)
{
for (inti =0; i<N2 ; i++)
{
```

```
29 res [j] [i] = 0 ;
30 for(intk=0; k<N0; k++)
31 {
32 inttmp_a = a [j] [k] ;
33 inttmp_b = b [i] [k] ;
34 res [j] [i] += tmp_a*tmp_b ;
35 }
36 }
37 }
38
39 for (inti =0; i <(int)N0 ; i++) fre e (a[i]) ;
40 free (a) ;
41
42 for(int i =0; i <(int)N2 ; i++) fre e (b [i]) ;
43 free (b) ;
44
45 for (int i =0; i <(int)N2 ; i++) free(res[i]);
46 free(res);
47
48 }
```

**Annexe 3 : Modèle de signature du parcours P1**

```
1 # Occurence X
2 deltaX = [-dimX+1, 1]
3 occDeltaX = [dimY-1, dimY*(dimX-1)]
4
5 # Occurence Y
6 deltaY = [0 , 1]
7 occDeltaY = [dimY*(dimX-1), dimY-1]
```

**Annexe 4 : Modèle de signature du parcours P2**

1 # Occurence X 2 deltaX = [0 , 1] 3 occDel taX = [dimX*(dimY-1), dimX-1] 4 5 # Occurence Y 6 occDeltaY = [-dimY+1, 1] 7 occDeltaY = [dimX-1, dimX*(dimY-1)]

**Annexe 5 : Modèle de signature du parcours P3**

```
1 d iag = math.sqrt(dimX**2 + dimY**2)
2 dim = min(dimX , dimY)
3 peack = dimX*dimY + 1 - (dimX + dimY)
4
5 # Occurence X
6 deltaX = [i for i in range(-dim+2, 2)]
7 occDeltaX = [2 for i in range(-dim+2, 0)]
8 occDeltaX.append(peack)
9
10 # Occurence Y
11 deltaY = [i for i in range (-dim+1, 2)]
12 occDeltaY = [2 for i in range(-dim+2, 0)]
13 occDeltaY.append(0)
14 occDeltaY.append(peack)
15
16 if (dimX < dimY) :
17 occDeltaX.insert(0, dimY-dimX)
18 occDeltaYinsert(0, dimY-dimX)
19 else :
20 occDeltaX.insert(0, dimX-dimY + 2)
```

28

```
21 occDeltaYinsert(0, dimX-dimY + 2)
```

**Annexe 6 : Modèle de signature du parcours P4**

```
1 totalOcc = dimY * dimX -1
2
3 # Occurence X
4 de It aX = [-dimX+1]
5 occDeltaX = [nbBlock_Y_ceil - 1]
6 tota Occ -= occDeltaX [-1]
7
8 ocurencel = (dimX - 1) * nbBlock_Y_ceil
9 totalOcc -= ocurence1
10
11 delt aX . append (0)
12 occDel taX . append (total Occ)
13
14 deltaX.append(1)
15 occDeltaX.append(ocurence1)
16
17 # Occurence Y
18 totalOcc = dimY * dimX - 1
19
20 deltaY = [1 - dimY_block]
21 occDeltaY = [(dimX - 1) * nbBlock_Y]
22 totalOcc -= occDeltaY[-1]
23
24 if (remainBlock_Y > 0) :
25 deltaY.append (1 - remainBlock_Y)
26 occDeltaY.append (dimX - 1)
27 totalOcc = occDeltaY [-1]
28
29 deltaY.append(1)
30 occDeltaY.append(totalOcc)
```

**Annexe 7 : Agencement optimisé associé au modèle de signature du parcours P1**

| Instructions spécifiques en langage V0 | Code générique en langage C++ |
|---|---|
| MATRIX_DEFINE(TYPE, NAME) | TYPE **NAME; |
| MATRIX_ALLOCATE(TYPE, NBL, NBC, NAME) | NAME =(TYPE **)malloc(NBC * sizeof(TYPE*)); for (int i=0; i<(int) NBC; i++)<br>NAME[i]=(TYPE *)malloc(NBL *sizeof(TYPE)); |
| MATRIX_GET(NAME, NDL, NDC) | NAME[NDL][NDC]; |
| MATRIX_SET(NAME, NDL, NDC, VALUE) | NAME[NDL][NDC]= VALUE; |
| MATRIX_FREE(NAME, NBL, NBC, TYPE) | for (int i=0; i<(int)NBL; i++) free(NAME[i]); free(NAM E); |

**Annexe 8 : Agencement optimisé associé au modèle de signature du parcours P2**

| Instructions spécifiques en langage V0 | Code générique en langage C++ |
|---|---|
| MATRIX_DEFINE(TYPE, NAME) | TYPE **NAME; |

(suite)

| Instructions spécifiques en langage V0 | Code générique en langage C++ |
|---|---|
| MATRIX_ALLOCATE(TYPE, NBL, NBC, NAME) | NAME =(TYPE **)malloc(NBL * sizeof(TYPE*)); for (int i=0; i<(int)NBL; i++)<br>NAME[i]=(TYPE *)malloc(NBC*sizeof(TYPE)); |
| MATRIX_GET(NAME, NDL, NDC) | NAME[NDL][NDC]; |
| MATRIX_SET(NAME, NDL, NDC, VALUE) | NAME[NDL][NDC]= VALUE; |
| MATRIX_FREE(NAME, NBL, NBC, TYPE) | for (int i=0; i<(int)NBL; i++) free(NAME[i]); free(NAM E); |

**Annexe 9 : Agencement optimisé associé au modèle de signature du parcours P3**

| Instructions spécifiques en langage V0 | Code générique en langage C++ |
|---|---|
| MATRIX_DEFINE(TYPE, NAME) | TYPE **NAME; |
| MATRIX_ALLOCATE(TYPE, NBL, NBC, NAME) | NAME =(TYPE **)malloc((NBL + NBC+1)* sizeof(TYPE*)); for (int i=0; i<(int) (NBL + NBC+1); i++)<br>{NAME[i]=(TYPE *)malloc((NBL + NBC+1) * sizeof(TYPE))}; |
| MATRIX_GET(NAME, NDL, NDC) | NAME[NDL][NDC]; |
| MATRIX_SET(NAME, NDL, NDC, VALUE) | NAME[NDL][NDC]= VALUE; |
| MATRIX_FREE(NAME, NBL, NBC, TYPE) | for (int i=0; i<(int)NBL; i++) free(NAME[i]); free(NAM E); |

**Revendications**

**1.** Procédé de construction d'une signature caractéristique des accès, par un microprocesseur, à une mémoire lorsque ce microprocesseur exécute un programme d'ordinateur, ce procédé comportant à cet effet l'exécution (112) du programme d'ordinateur par le microprocesseur et, lors de cette exécution, le microprocesseur réitère plusieurs fois les opérations suivantes :

1) le microprocesseur construit l'adresse d'une donnée à accéder à l'intérieur d'une structure de données, à partir d'un identifiant de la structure de données et à partir de la valeur d'un ou plusieurs indices utilisés pour repérer la position de la donnée à accéder à l'intérieur de la structure de données, puis
2) le microprocesseur exécute une instruction d'accès à cette donnée de la structure de données, cette instruction d'accès étant paramétrée par l'adresse construite, puis
3) le microprocesseur exécute une instruction qui modifie la valeur d'au moins un de ces indices de manière à accéder à la donnée suivante de la structure de données lors de la prochaine itération des opérations 1) et 2),

**caractérisé en ce que** le procédé comporte les étapes suivantes :

4) à chaque fois que l'opération 2) est exécutée, le microprocesseur relève (114) l'identifiant de la structure de données et un identifiant de position qui identifie la position de la donnée accédée à l'intérieur de cette structure de données, cette identifiant de position étant choisi dans le groupe constitué :

- des indices qui permettent de repérer la position de la donnée à l'intérieur de la structure de données, et
- de l'adresse virtuelle de la donnée accédée lorsque la structure de données est située à l'intérieur d'une seule plage continue d'adresses virtuelles dans laquelle il n'existe pas de données qui n'appartiennent pas à cette structure de données,

la suite ordonnée temporellement des identifiants de position ainsi relevés formant un motif d'accès relevé, puis 5) pour chaque motif d'accès relevé associé à un même identifiant de structure de données, le microprocesseur construit (120) une distribution statistique à partir des seuls identifiants de position de ce motif d'accès relevé, cette distribution statistique étant indépendante des instructions d'accès exécutées pour accéder à cette structure de données,

l'ensemble des distributions statistiques ainsi construit et associé à l'identifiant de cette structure de données formant une signature caractéristiques des accès à cette structure de données et l'ensemble des signatures caractéristiques des accès aux structure de données formant la signature caractéristique des accès, par le microprocesseur, à la mémoire.

2. Procédé selon la revendication 1, dans lequel, lors de l'étape 5) :

- le microprocesseur transforme (126) le motif d'accès relevé en un motif d'accès transformé en appliquant une fonction de transformation qui remplace chaque identifiant de position relevé par un identifiant de position relative par rapport à une autre donnée de la même structure de données, la fonction de transformation étant apte, en plus, à générer un motif d'accès transformé permettant la construction d'une signature caractéristique propre à identifier un parcours particulier des données de la structure de données parmi plusieurs parcours possibles, puis
- pour chaque motif d'accès transformé associé à un même identifiant de structure de données, le microprocesseur construit (128) une distribution statistique des identifiants de position relative de ce motif d'accès transformé, cette distribution statistique comportant :

   • des classes de valeurs possibles pour les identifiants de position relative, et associé à chacune de ces classes,
   • un nombre fonction du nombre d'occurrence de cette classe dans le motif d'accès transformé.

3. Procédé selon la revendication 2, dans lequel l'application (126) de la fonction de transformation remplace chaque identifiant de position relevé par la distance entre cet identifiant de position relevé et l'identifiant de position précédemment relevé.

4. Procédé selon l'une quelconque des revendications précédentes, dans lequel chaque distribution statistique est une distribution statistique normalisée dans laquelle le cumul des nombres associés à chaque classe de la distribution statistique est égal à un.

5. Procédé selon l'une quelconque des revendications précédentes, dans lequel, lors de l'étape 4) (114), le microprocesseur relève les valeurs de chaque indice utilisé pour construire l'adresse de la donnée accédée et traite chaque indice relevé en tant qu'identifiant de position, de sorte que, lors de l'étape 5) (128), la signature caractéristique construite comporte une distribution statistique normalisée pour chacun de ces indices.

6. Procédé selon la revendication 5, dans lequel la structure de données est une matrice et les indices correspondent aux numéros de lignes et de colonnes à l'intersection desquelles se trouve la donnée à accéder à l'intérieur de cette matrice.

7. Procédé selon la revendication 1, dans lequel :

- le microprocesseur transforme (126) le motif d'accès relevé en un motif d'accès transformé en appliquant une fonction de transformation qui remplace chaque identifiant de position relevé par une valeur $f_{t,3}(D_{S,n})$ proportionnelle à un ratio Av(Ds,n)/Occ(Ds,n), où :

   - $D_{S,n}$ est la donnée dont l'identifiant de position a été relevé,
   - Occ($D_{S,n}$) est une grandeur représentative du nombre d'occurrences de la donnée $D_{S,n}$ dans le motif d'accès relevé,
   - Av($D_{S,n}$) est le nombre moyen d'accès à d'autres données de la structure de données entre deux accès consécutifs à la donnée $D_{S,n}$,

le motif d'accès transformé ainsi obtenu permettant la construction d'une signature caractéristique propre à identifier un parcours particulier des données de la structure de données parmi plusieurs parcours possibles, puis

- pour chaque motif d'accès transformé associé à un même identifiant de structure de données, le microprocesseur construit (128) la distribution statistique à partir des valeurs $f_{t.3}(D_{S,n})$ contenues dans ce motif d'accès transformé.

8. Procédé de compilation d'un code source d'un programme d'ordinateur pour un calculateur cible, ce procédé comportant :

   a) la fourniture (104) du code source du programme d'ordinateur, ce code source contenant :

   - une déclaration d'une structure de données, cette structure de données étant apte à être enregistrée dans une mémoire du calculateur cible selon un agencement standard et, en alternance, selon un agencement optimisé, l'agencement optimisé correspondant à un agencement des données de la structure de données dans la mémoire qui améliore une performance du calculateur cible lorsque le calculateur cible parcourt les données de cette structure de données dans un ordre particulier, l'agencement standard correspondant à un agencement des données de la structures de données dans la mémoire qui n'améliore pas autant la performance du calculateur cible lorsque le calculateur cible parcourt les données de la structure de données dans le même ordre particulier, et
   - des instructions d'accès aux données de la structure de données,

   b) la fourniture (104) d'une base de données à partir de laquelle une signature modèle des accès à cette structure de données peut être extraite, cette signature modèle étant identique à celle obtenue en mettant en œuvre le procédé de l'une quelconque des revendications 1 à 6 pour construire la signature caractéristique des accès à cette structure de données, lorsque le microprocesseur exécute un programme d'ordinateur qui parcourt les données de cette structure de données dans ledit ordre particulier,
   c) la génération (106), à partir du code source et par un compilateur, d'un premier code exécutable du programme d'ordinateur, et
   d) l'exécution (112), par le compilateur, de ce premier code exécutable,

   **caractérisé en ce que** le procédé comporte également l'exécution par le compilateur des étapes suivantes :

   e) la construction (120), par le compilateur, d'une signature caractéristique des accès à la structure de données en mettant en œuvre le procédé de l'une quelconque des revendications 1 à 7, puis
   f) la comparaison (144) de la signature construite à la signature modèle extraite de la base de données, puis
   g) seulement lorsque la signature modèle correspond à la signature construite, la génération (150), à partir du même code source, d'un second code exécutable du programme d'ordinateur apte à être exécuté par le calculateur cible et qui, lorsqu'il est exécuté par le calculateur cible, utilise l'agencement optimisé pour enregistrer la structure de données dans la mémoire du calculateur cible.

9. Procédé selon la revendication 8, dans lequel :

   - l'étape b) (104) comporte la fourniture d'une base de données qui permet d'associer chaque signature modèle extraite à au moins un identifiant d'architecture matériel de calculateur cible,
   - le procédé comporte une étape (118) d'acquisition d'un identifiant de l'architecture matérielle du calculateur cible, et
   - lors de l'étape f) (144), la signature modèle correspond à la signature construite seulement si la signature modèle est également associée à un identifiant d'architecture matérielle identique à l'identifiant d'architecture matériel acquis.

10. Procédé selon l'une quelconque des revendication 8 à 9, dans lequel

   - l'étape f) (144) comporte le calcul d'un coefficient $\rho(DS_c, DS_m)$ de corrélation entre une distribution statistique de la signature modèle et une distribution statistique de la signature construite selon la relation suivante :

$$\rho\left(DS_c, DS_m\right) = \frac{1}{N} \frac{\sum\limits_{i=0}^{N-1} \left(DS_c[i] - E_{DSc}\right)\left(DS_m[i] - E_{DSm}\right)}{\sigma_s \sigma_{s'}}$$

où :

- $DS_c$ et $DS_m$ sont, respectivement, la distribution statistique de la signature construite et la distribution statistique de la signature modèle comparées,
- $\rho(DS_c, DS_m)$ est le coefficient de corrélation calculé,
- N est le nombre total de classes des distributions statistiques comparées,
- $DS_c[i]$ est la quantité associée à la $i^{ème}$ classe par la distribution statistique $DS_c$,
- $DS_m[i]$ est la quantité associée à la $i^{ème}$ classe par la distribution statistique $DS_m$,
- $E_{DSc}$ et $E_{DSm}$ sont les espérances mathématiques, respectivement, des distributions statistiques $DS_c$ et $DS_m$,
- $\sigma_{DSc}$ et $\sigma_{DSm}$ sont les écarts types, respectivement, des distributions statistiques $DS_c$ et $DS_m$, et

- la signature modèle correspond à la signature construite seulement si le coefficient $\rho(DS_c, DS_m)$ calculé est le plus grand des coefficients calculés lors de l'étape f) ou dépasse un seuil prédéterminé.

11. Procédé selon l'une quelconque des revendications 8 à 10, dans lequel :

- la mémoire du calculateur cible comporte une mémoire cache et la performance améliorée par l'agencement optimisé est la vitesse d'exécution,
- la signature caractéristique est une signature caractéristique représentative de l'ordre particulier dans lequel le microprocesseur parcourt les données de la structure de données lorsqu'il exécute le programme d'ordinateur, et
- l'agencement optimisé est un agencement dans lequel les données de la structure de données sont enregistrées en mémoire, les unes immédiatement après les autres, dans un ordre plus proche de l'ordre temporelle dans lequel elles sont accédées lors de l'exécution du programme d'ordinateur, que l'ordre dans lequel elles sont enregistrées en mémoire lorsque l'agencement standard est utilisé.

12. Procédé selon l'une quelconque des revendications 8 à 11 dans lequel, lors des étapes c) et g), l'ordre d'exécution des instructions d'accès aux données de la structure de données du code source est laissé inchangé.

13. Procédé selon l'une quelconque des revendications 8 à 12, dans lequel :

- la fourniture (104) de la base de données comprend la fourniture d'une base de données contenant un modèle de signatures paramétré par la taille de la structure de données, ce modèle de signature permettant de générer pour ledit parcours particulier, les différentes signatures modèles qui correspondent à chacune des tailles possibles de la structure de données,
- lors de l'exécution (112), par le compilateur, du premier code exécutable, le compilateur relève (114) la taille de la structure de données, et
- avant l'étape f), le compilateur construit (142) la signature modèle à laquelle est comparée la signature construite à l'aide du modèle de signature enregistré dans la base de données et de la taille relevée de la structure de données.

14. Procédé selon la revendication 13, dans lequel la structure de données déclarée est une matrice à deux dimensions et la base de données fournie contient :

- un premier modèle de signatures paramétré par la taille de la matrice pour un premier parcours particulier dans lequel les données de la matrice sont parcourues ligne par ligne, et

- un deuxième modèle de signature paramétré par la taille de la matrice pour un deuxième parcours particulier dans lequel les données de la matrice sont parcourues colonne par colonne.

**15.** Procédé de détection d'une altération d'un code exécutable d'un programme d'ordinateur exécuté par un microprocesseur, ce microprocesseur accédant de façon répétée à des données d'une structure de données enregistrée dans une mémoire lorsqu'il exécute ce code exécutable, ce procédé comportant :

a) la fourniture (100) d'une base de données à partir de laquelle une signature modèle des accès à cette structure de données peut être extraite, cette signature modèle étant identique à celle obtenue en mettant en œuvre le procédé de l'une quelconque des revendications 1 à 6 pour construire une signature caractéristique lorsque le microprocesseur exécute ledit code exécutable en absence de toute altération, puis
b) l'exécution (202) du code exécutable du programme d'ordinateur par le microprocesseur, et
c) lors de cette exécution du code exécutable, la construction (206) d'une signature dite « construite » des accès à cette structure de données en mettant en œuvre le procédé de l'une quelconque des revendications 1 à 7 pour construire cette signature caractéristique, puis
d) la comparaison (208) de la signature construite à la signature modèle extraite de la base de données, puis
e) lorsque la signature construite est différente de la signature modèle, le déclenchement (212) du signalement d'une altération du code exécutable, et
f) lorsque la signature construite correspond à la signature modèle, l'absence de ce déclenchement du signalement d'une altération du code exécutable.

**16.** Procédé selon la revendication 15, dans lequel :

- lors de l'étape a), la base de données fournie associe également un instant $t_{ref}$ à chaque signature modèle qui peut être extraite, l'instant $t_{ref}$ étant égal à l'instant auquel la structure de données est accédée par le microprocesseur lorsqu'il exécute le code exécutable en absence d'altération,
- lors de l'étape b), un instant tt auquel la structure de données est accédée, est relevée par le microprocesseur, et
- lors de l'étape d) (208), lorsque l'écart entre les instants $t_t$ et $t_{ref}$ associés au même identifiant de structure de données est supérieur à un seuil prédéterminé, les signatures comparées sont considérés comme étant différentes.

**17.** Support d'enregistrement d'informations, lisible par un microprocesseur, **caractérisé en ce que** ce support comporte des instructions pour l'exécution d'un procédé conforme à l'une quelconque des revendications précédentes, lorsque ces instructions sont exécutées par le microprocesseur.

**18.** Compilateur (40) d'un code source d'un programme d'ordinateur, ce compilateur étant configuré pour :

a) acquérir le code source du programme d'ordinateur, ce code source contenant :

- une déclaration d'une structure de données, cette structure de données étant apte à être enregistrée dans une mémoire du calculateur cible selon un agencement standard et, en alternance, selon un agencement optimisé, l'agencement optimisé correspondant à un agencement des données de la structure de données dans la mémoire qui améliore une performance du calculateur cible lorsque le calculateur cible parcourt les données de cette structure de données dans un ordre particulier, l'agencement standard correspondant à un agencement des données de la structures de données dans la mémoire qui n'améliore pas autant la performance du calculateur cible lorsque le calculateur cible parcourt les données de la structure de données dans le même ordre particulier, et
- des instructions d'accès aux données de la structure de données,

b) enregistrer une base de données (74) à partir de laquelle une signature modèle des accès à cette structure de données peut être extraite, cette signature modèle étant identique à celle obtenue en mettant en œuvre le procédé selon l'une quelconque des revendications 1 à 6 pour construire la signature caractéristique des accès à cette structure de données, lorsque le microprocesseur exécute un programme d'ordinateur qui parcourt les données de la structure de données dans ledit ordre particulier,
c) générer automatiquement, à partir du code source, un premier code exécutable (76) du programme d'ordinateur, et
d) exécuter ce premier code exécutable (76),

**caractérisé en ce que** le compilateur (40) est également configuré pour exécuter les étapes suivantes :

e) la construction d'une signature caractéristique des accès à la structure de données en mettant en œuvre le procédé conforme à l'une quelconque des revendications 1 à 7, puis

f) la comparaison de la signature construite à la signature modèle extraite de la base de données, puis

g) seulement lorsque la signature modèle correspond à la signature construite, la génération, à partir du même code source, d'un second code exécutable du programme d'ordinateur apte à être exécuté par le calculateur cible et qui, lorsqu'il est exécuté par le calculateur cible, utilise l'agencement optimisé pour enregistrer la structure de données dans la mémoire du calculateur cible.

Fig. 1

Fig. 2

| | | | | |
|---|---|---|---|---|
| 1 | 3 | **5** | **7** | 9 |
| 2 | 4 | **6** | **8** | 10 |
| 11 | 13 | **15** | **17** | 19 |
| 12 | 14 | **16** | **18** | 20 |
| **21** | **22** | 23 | 24 | 25 |

**Fig. 3**

| | | | | |
|---|---|---|---|---|
| **1** | | **2** | | **3** |
| **4** | | **5** | | **6** |
| **7** | | **8** | | **9** |
| **10** | | **11** | | **12** |
| **13** | | **14** | | **15** |

**Fig. 4**

**Fig. 5**

**Fig. 6**

**Fig. 7**

**Fig. 8**

Fig. 9

Fig. 10

Fig. 11

Fig. 12

Fig. 13

Fig. 14

**Europäisches Patentamt**
**European Patent Office**
**Office européen des brevets**

## RAPPORT DE RECHERCHE EUROPEENNE

Numéro de la demande

EP 20 20 6077

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2019/063930 A1 (COMMISSARIAT ENERGIE ATOMIQUE [FR]) 4 avril 2019 (2019-04-04) * alinéa [0048] * * alinéa [0071] - alinéa [0072] * * alinéa [0093] * * alinéa [0053] * ----- | 1-18 | INV. G06F8/41 G06F21/44 G06F21/51 G06F21/56 |
| X | JP 2010 003031 A (FUJITSU LTD) 7 janvier 2010 (2010-01-07) * alinéa [0021] - alinéa [0025] * ----- | 1-18 | |

DOMAINES TECHNIQUES RECHERCHES (IPC)

G06F

Le présent rapport a été établi pour toutes les revendications

| Lieu de la recherche | Date d'achèvement de la recherche | Examinateur |
|---|---|---|
| Munich | 12 mars 2021 | Medvesan, Oana |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 20 20 6077

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-03-2021

| Document brevet cité au rapport de recherche | Date de publication | Membre(s) de la famille de brevet(s) | Date de publication |
|---|---|---|---|
| WO 2019063930 A1 | 04-04-2019 | FR 3071642 A1<br>WO 2019063930 A1 | 29-03-2019<br>04-04-2019 |
| JP 2010003031 A | 07-01-2010 | JP 5146134 B2<br>JP 2010003031 A | 20-02-2013<br>07-01-2010 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019063930 A

- JP 2010003031 B

**Littérature non-brevet citée dans la description**

- Malware detection using machine learning based analysis of virtual memory access patterns. **ZHIXING XU et al.** Proceedings of the conférence on design, automation & test in Europe. European Design and Automation Association, 2017, 169-174
- Multiprocessor system-on-chip data reuse analysis for exploring customized memory hierarchies. **ILYA ISSENIN et al.** 43rd ACM/IEEE Design Automation Conference. IEEE, 2006, 49-52

- Compiler driven data layout optimization for regular/irregular array access patterns. **DOOSAN CHO et al.** ACM Sigplan Notices. ACM, 2008, vol. 43, 41-50
- Smart instruction codes for in-memory computing architectures compatible with standard sram interfaces. **MAHA KOOLI et al.** Design, Automation & Test in Europe Conférence & Exhibition (DATE). IEEE, 2018, 1634-1639